# EUROPEAN PATENT SPECIFICATION

(11) **EP 4 470 429 B1**
(45) Date of publication and mention of the grant of the patent: **23.09.2026**
(21) Application number: 24207054.8
(22) Date of filing: 16.06.2021
(51) Int. Cl.: G07F 13/10, G07F 13/06, A47J 31/46

(54) **BEVERAGE DISPENSING SYSTEM**
GETRÄNKEAUSGABESYSTEM
SYSTÈME DE DISTRIBUTION DE BOISSONS

(30) Priority: 17.06.2020 US 202063040117 P
(43) Date of publication of application: 04.12.2024
(62) Document number(s) of the earlier application(s) in accordance with Art. 76 EPC: 21740332.8 / 4 169 004
(73) Proprietor: Luigi Lavazza S.p.A., 10152 Torino (IT)
(72) Inventor: McCOY, Tony, Devon, TQ9 7RP (GB); YOUNG, Jonathan, Dorset, BH23 4RA (GB); FURNER, Andrew, Winchester, Hampshire, SO21 3AN (GB)
(74) Representative: Archer, Graham John

(56) References cited:
- WO-A1-2014/200480
- US-A- 4 388 338
- US-A1- 2005 274 738
- US-A1- 2018 078 084
- US-A1- 2018 251 360

## Description

### CROSS-REFERENCE TO RELATED APPLICATIONS

The present application claims priority to United States Provisional Patent Application Serial No. 63/040,117, filed June 17, 2020.

### BACKGROUND OF THE INVENTION

'In Cup' beverage vending machines create a beverage in a disposable cup and then present the disposable cup with the beverage therein to a consumer. Such 'In Cup' beverage vending machines typically use cups that are pre-filled with powdered ingredients and inject a liquid such as water (and/or milk and sugar) into the cups to form the desired beverage. The cups are held inside the machine in multiple stacks to maximize the number of cups that can be stored. The cups themselves are pre-filled with powdered ingredients and stacked one inside the other to facilitate ongoing handling.

In conventional "In Cup" beverage vending machines, the types of beverages that can be made is limited based on the pressure at which the water is injected into the cups. Specifically, such conventional "In Cup" beverage vending machines may only inject water into the cups at a single pressure or velocity which can enable it to deliver/make tea, coffee-based drinks, chocolate, cold fruit drinks, or the like. However, such machines are unable to create drinks like cappuccino, cold frappe, and the like which requires a high pressure water to be injected into the cups during beverage generation. Thus, a need exists for an "In Cup" beverage vending machine that can inject water at multiple pressures and/or velocities, dewater after a beverage is dispensed to a user, and prevent uncontrolled splashing during the dewatering. Examples of the prior art is disclosed in the patent applications published under the following numbers, US 4 388 338 A, US2018/078084, US2005/274738, US2018/251360 and WO2014/200480.

### BRIEF SUMMARY

According to an aspect of the present invention there is provided a method for providing a fluid from a dispensing nozzle to a beverage ingredient according to claim 1. The scope of the invention is defined by the attached claims.

A system, device, and/or method is provided for generating a beverage. For example, an in-cup system for generating a beverage is provided. The system includes a housing; a plurality of cups housed within the housing; a cup dispensing mechanism configured to dispense one of the plurality of cups to a delivery mechanism; and a fluid subsystem configured to introduce a fluid into the one of the plurality of cups that is positioned on the delivery mechanism. One or more of the plurality of cups may contain a beverage ingredient. The fluid delivery system may include a dispensing nozzle. The dispensing nozzle may include a first axial portion defining a first passageway having a first cross-sectional area and a second axial portion downstream of the first axial portion. The second axial portion defines a second passageway having a second cross sectional area.

A first inlet may flow into the first passageway. The first inlet may be configured to receive the fluid at a first temperature. A second inlet may flow into the second passageway. The second inlet may be configured to receive the fluid at the first temperature. A third inlet may flow into the first passageway. The third inlet may be configured to receive the fluid at a second temperature. A fourth inlet may flow into the second passageway. The fourth inlet may be configured to receive the fluid at the second temperature. A dispensing outlet may be configured to dispense the fluid from the dispensing nozzle. The fluid received by the first inlet or the third inlet may be dispensed through the dispensing outlet at a first pressure or a first velocity. The fluid received by the second inlet or the fourth inlet may be dispensed through the dispensing outlet at a second pressure or a second velocity. The first pressure or the first velocity may be different than the second pressure or the second velocity.

A method for providing a fluid from a dispensing nozzle to a beverage ingredient may be provided. The method includes providing a receptacle containing the beverage ingredient; positioning at least one of the dispensing nozzle or the receptacle so that an outlet of the dispensing nozzle is located proximate a receiving portion of the receptacle; dispensing the fluid, via a standard water flow, from the outlet of the dispensing nozzle to the receiving portion of the receptacle; and introducing the fluid, via a jetted water flow, from the outlet of the dispensing nozzle to the receiving portion of the receptacle. The fluid may be provided via the standard water flow for a predefined first duration or a predefined first volume. The fluid may be provided to the receiving portion of the receptacle via the jetted water flow after the fluid is provided to the receiving portion of the receptacle via the standard water flow.

A dispensing nozzle for providing a fluid to beverage ingredients located within a receptacle may be provided. The dispensing nozzle includes a first axial portion defining a first passageway having a first cross-sectional area, the first axial portion terminating at a first outlet; and a second axial portion defining a second passageway having a second cross-sectional area, at least a segment of the second axial portion being located downstream of the first outlet of the first axial portion and terminating at a dispensing outlet. The second cross-sectional area may be greater than the first cross-sectional area. Upon the fluid exiting through the first outlet of the first axial portion of the dispensing nozzle, the fluid may flow through the second passageway of the second axial portion to the dispensing outlet. The fluid exiting through the first outlet contacts an inner surface of the second axial portion prior to exiting the dispensing nozzle via the dispensing outlet thereby reducing a splattering of the fluid outside of the dispensing nozzle.

### BRIEF DESCRIPTION OF THE DRAWINGS

FIG. 1 is a perspective view of a beverage dispensing system with a door thereof in a closed state in accordance with an embodiment of the present invention;
FIG. 2 is a perspective view of the beverage dispensing system of FIG. 1 with the door thereof in an open state;
FIG. 3 is a top plan view of a cup dispensing mechanism of the beverage dispensing system of FIG. 1;
FIG. 4 is a close-up view of area IV of FIG. 3;
FIG. 5 is a perspective view of a portion of the cup dispensing mechanism of FIG. 3 with a stack of cups therein;
FIG. 6A is a perspective view of a scroll of the cup dispensing mechanism of FIG. 3;
FIG. 6B is a front plan view of the scroll of FIG. 6A;
FIGS. 7A-7F are close-up views of a portion of the cup dispensing mechanism of FIG. 3 illustrating the operation of the cup dispensing mechanism to dispense a lowermost cup in the stack of cups;
FIG. 8 is a fluid flow diagram of a fluid subsystem of the beverage dispensing system of FIG. 1;
FIG. 9 is the fluid flow diagram of FIG. 8 illustrating a flow path for a hot tank fill process;
FIG. 10 is the fluid flow diagram of FIG. 8 illustrating a flow path for a hot water low pressure dispense process;
FIG. 11 is the fluid flow diagram of FIG. 8 illustrating a flow path for a cold water low pressure dispense process;
FIG. 12 is the fluid flow diagram of FIG. 8 illustrating a flow path for a hot water high pressure dispense process;
FIG. 13 is the fluid flow diagram of FIG. 8 illustrating a purge of the hot water high pressure flow path;
FIG. 14 is the fluid flow diagram of FIG. 8 illustrating a flow path for a cold water high pressure dispense process;
FIG. 15 is the fluid flow diagram of FIG. 8 illustrating a purge of the cold water high pressure flow path;
FIG. 16 is the fluid flow diagram of FIG. 8 illustrating a flow path for dewatering the high pressure flow path of the fluid subsystem;
FIG. 17A is a schematic drawing of an example dispense nozzle of the fluid subsystem;
FIG. 17B is another schematic drawing of an example dispense nozzle of the fluid subsystem;
FIG. 18 is the fluid flow diagram of FIG. 8 illustrating a flow path for addressing overpressure in the high pressure flow path;
FIGS. 19A, 19B is a fluid flow diagram in which a device is omitted; and
FIGS. 20A-20E show another example dispense nozzle including multiple inlets and internal passageways having different cross sectional areas, as described herein.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the examples. Accordingly, the invention expressly should not be limited to such examples illustrating some possible non-limiting combination of features that may exist alone or in other combinations of features; the scope of the invention being defined by the claims appended hereto.

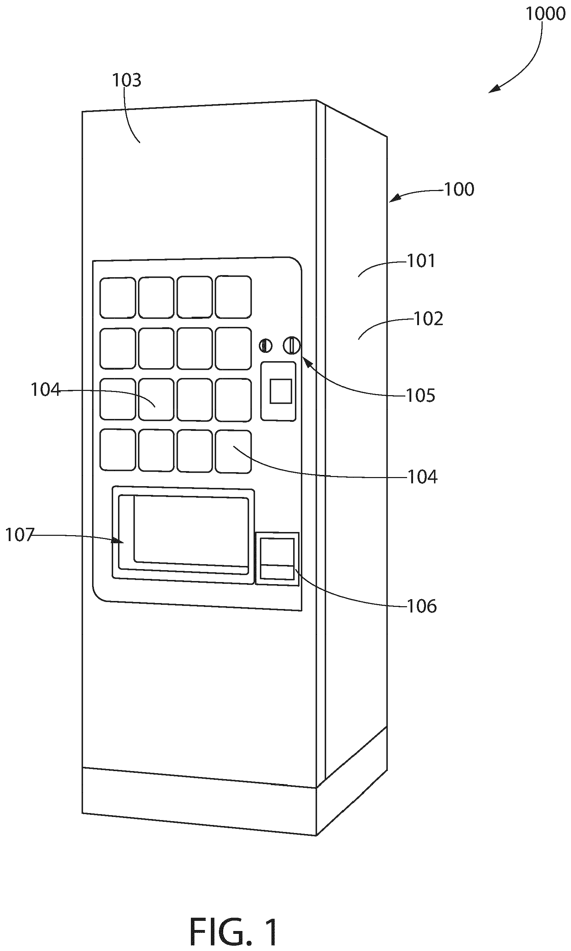

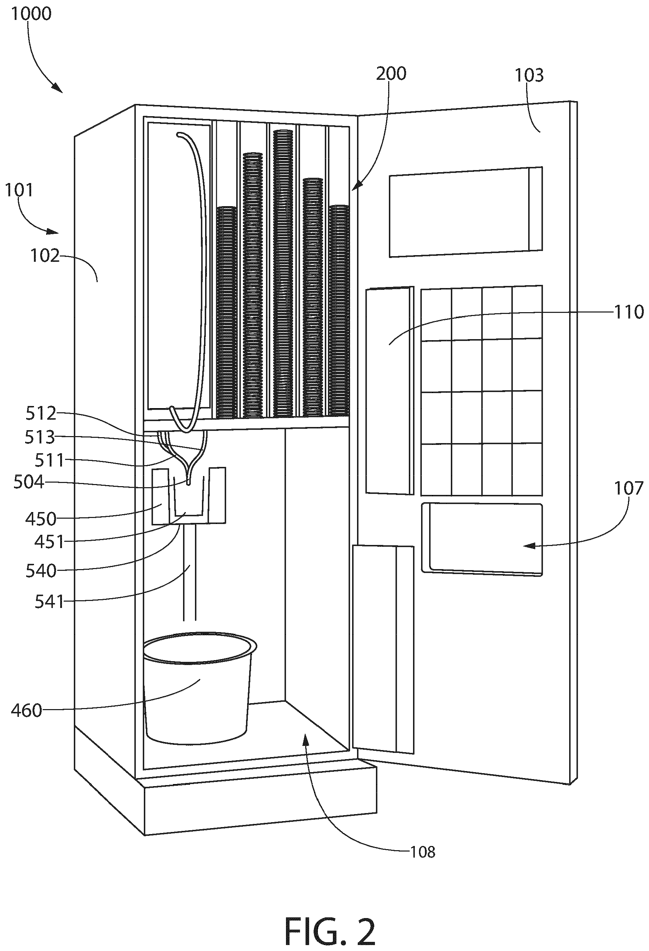

Referring to FIGS. 1 and 2, a beverage dispensing system 1000 is illustrated in accordance with an embodiment of the present invention. The beverage dispensing system 1000 comprises a beverage dispensing machine (hereinafter "the machine") 100, a cup dispensing mechanism 200 housed inside of the beverage dispensing machine 100, and a fluid subsystem 500 housed inside of the beverage dispensing machine 100. Operation of the beverage dispensing system 1000 includes automatic dispensing of one cup from the cup dispensing mechanism 200 into a delivery mechanism 450, filling the cup (which may pre-filled with a beverage ingredient) with hot or cold water, and then rotating or otherwise moving the delivery mechanism 450 to align the cup with an opening 107 in a door 103 of the machine 100 to present the cup with the beverage therein to a consumer. All of these actions are achieved by the beverage dispensing system 1000 automatically upon a user putting money into the machine 100 (if required) and pressing a button associated with a particular beverage. In some embodiments, the machine 100 may be configured to operate without requiring a user to first put money into the machine 100.

The machine 100 may include a housing 101 that includes a body portion 102 and the door 103 that can be closed (FIG. 1) and open (FIG. 2). The door 103 may be closed during normal use of the machine 100 and open during maintenance, cleaning, and/or when additional cups need to be inserted into the machine 100. On the door 103, there are a plurality of buttons 104, each of which includes indicia, graphics, or labeling for a different type of beverage. For example, one of the buttons 104 may include a graphic image of a particular type of coffee and another one of the buttons 104 may include a graphic image of hot chocolate, iced or hot tea, plain or flavored water, a type of soup, or the like. Basically, each of the buttons 104 is associated with one of the types of beverages that the beverage dispensing system 1000 is configured to create. As used herein, the term beverage may refer to drinkable beverages such as coffee, tea (hot and cold), hot chocolate, juices, seltzers, and the like as well as edible liquid-based food products such as soups.

The machine 100 may include a payment receiving section 105 (for receiving payment in coins, cash, or electronic payment which may include payment via a credit or debit card or payment via an electronic key that has money associated therewith) and/or a coin return area 106. The machine 100 may be preset to operate without requiring payment in some instances, such as if the machine 100 is placed in a place of employment and the employer desires to provide free beverages from the machine 100 as a perk. The door 103 of the machine 100 may include the opening 107 which serves as a beverage pick-up zone where the user/consumer can pick up the beverage after it is made by the machine 100.

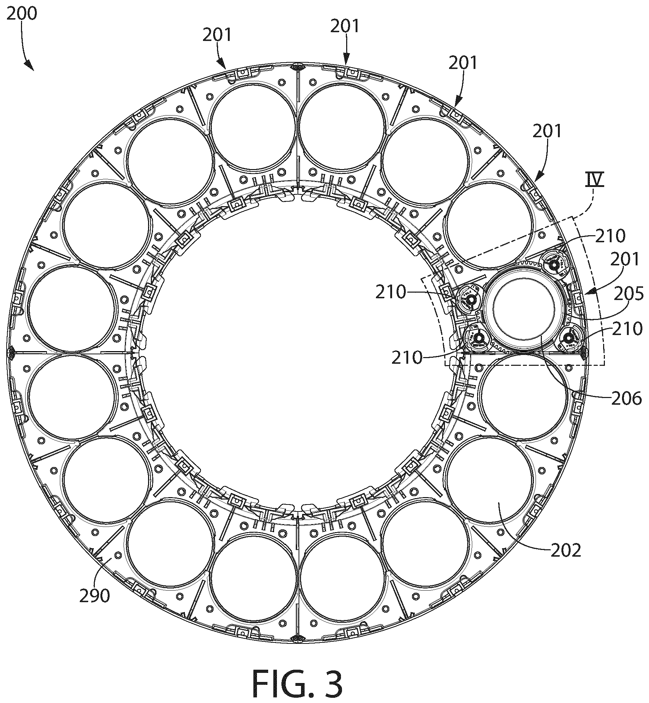

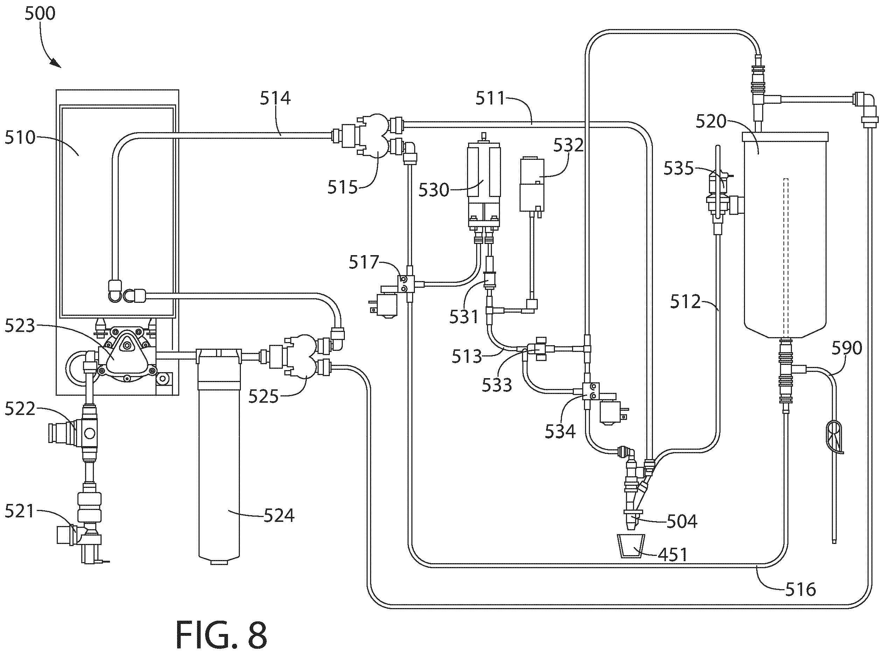

As shown in FIG. 2, the door 103 can be opened to expose an interior cavity 108 of the machine 100, which may house the cup dispensing mechanism 200 and the fluid subsystem 500 as described herein. The cup dispensing mechanism 200 may be described in greater detail below with reference to FIGS. 3-7F and the fluid subsystem 500 may be described in greater detail below with reference to FIGS. 8-18. The machine 100 may include a processor and/or circuitry 110 that includes the electronic components required for proper operation of the machine 100. For example, the processor 110 may be configured to receive signals indicative of a choice of beverage selected by a consumer and in response to receiving such signals the processor 110 may initiate operation of the cup dispensing mechanism 200 and the fluid subsystem 500 so that the correct beverage is generated and provided to the consumer.

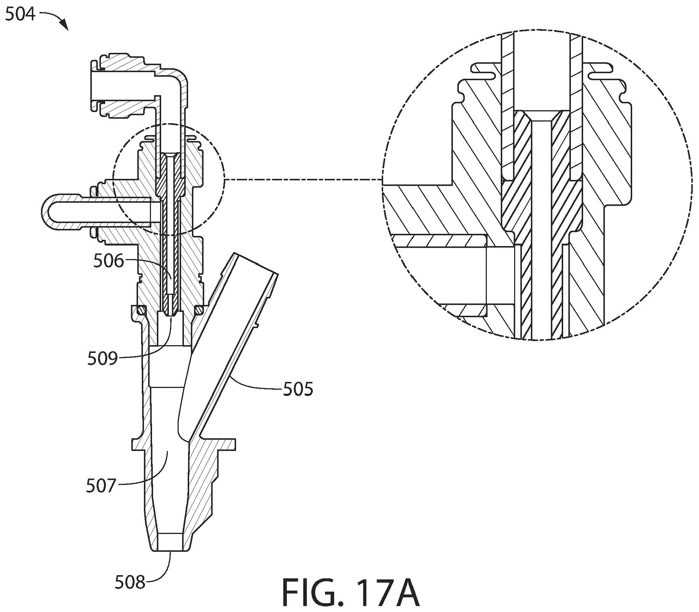

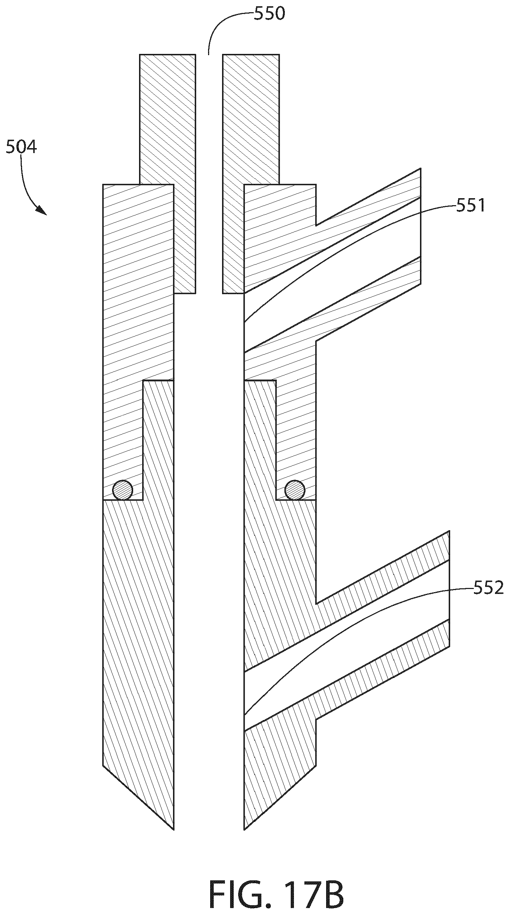

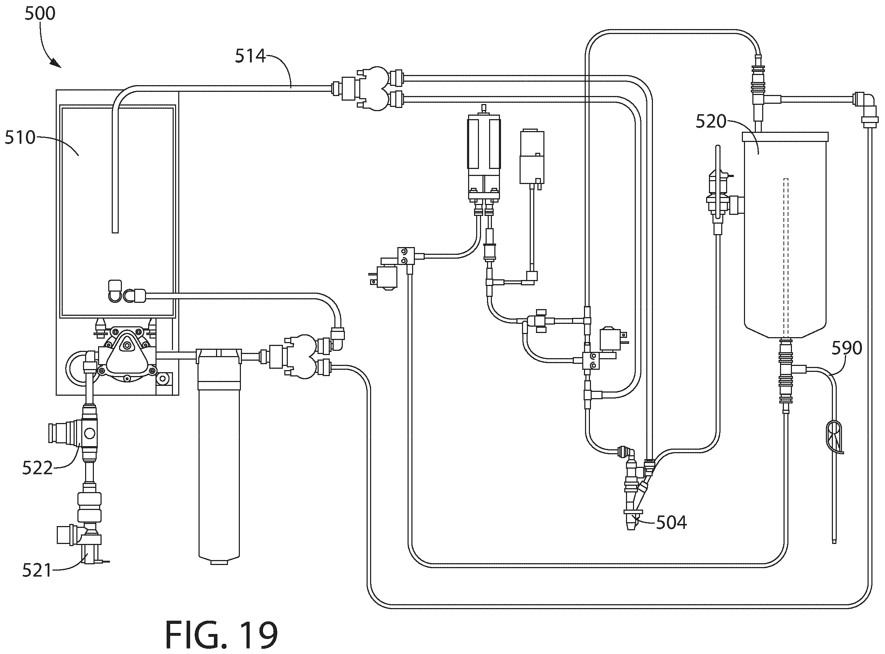

Example conduits of the fluid subsystem 500 are shown in FIG. 2. The conduits may include a hot water low pressure dispense conduit 512, a cold water low pressure dispense conduit 511, and a high pressure dispense conduit 513 which may be used to dispense either hot water or cold water depending on the final beverage or other edible product being made with the machine 100. The hot water low pressure dispense conduit 512, the cold water low pressure dispense conduit 511, and the high pressure dispense conduit 513 may be (*e.g.,* may all be) operably coupled to a dispense nozzle 504, which is illustrated and will be described in greater detail with reference to FIGS. 17A, 17B, 19A, and 19B. The dispense nozzle (*e.g.,* the same dispense nozzle 504) may be used to dispense the cold water at low pressure, the cold water at high pressure, the hot water at low pressure, and the hot water at high pressure. Using the same dispense nozzle 504 for dispensing the hot and cold water at both high and low pressures is desirable in some examples. For example, using the same dispense nozzle 504 for dispensing the hot and cold water at both high and low pressures is desirable due to space restrictions. The dispense nozzle 504 may be positioned to ensure that water delivery into the cup positioned below the dispense nozzle 504 is co-axial to the center line of the cup.

The delivery mechanism 450 is illustrated schematically and broken away in FIG. 2 so that a cup 451 held thereby is visible. The delivery mechanism 450 is coupled to the housing 101 (such as via guide rails or the like) and is positioned beneath the dispense nozzle 504. When the cup 451 is dispensed from the cup dispensing mechanism 200, the cup 451 is held by the delivery mechanism 450 so that the water can be injected into the cup 451 from the dispense nozzle 504. After the desired volume of water has been dispensed from the dispense nozzle 504 into the cup 451, the delivery mechanism 450 may rotate to align the cup with the opening 107 in the door 103 so that it can be provided to the user.

As shown in FIG. 2 there may be a container 460 positioned on the floor of the interior cavity 108 within the housing 101. The container 460 may serve as a slop bucket so that excess fluid can be captured in the container 460. Thus, for example, the delivery area of the machine 100 may include a drip tray 540. Such drip trays 540 are common in beverage vending machines so that if a user gets an incorrect drink by user or machine error or if the user simply does not want the drink, the user can pour the drink into the drip tray 540. A drain conduit 541 may extend from the drip tray 540 to the container 460 so that any liquid poured into the drip tray 540 will flow into the container 460. The liquid can then be collected into the container 460 until the machine 100 is serviced or cleaned, at which time the person performing the maintenance or cleaning may empty the container 460.

Referring to FIG. 3, a top plan view of the cup dispensing mechanism 200 is illustrated without any cups stacked thereon. The cup dispensing mechanism 200 comprises a carousel 290 that comprises a plurality of cup dispensing sections 201, each of which is configured to hold a stack of cups and to dispense cups from that stack. The carousel 290 is configured to rotate about a rotational axis during operation of the beverage dispensing system 1000 to align a desired one of the cup dispensing sections 201 with an actuator mechanism (not shown) and with the delivery mechanism 450 to dispense s desired cup into the delivery mechanism 450 where it can be filled with water in accordance with a beverage selection made by a consumer.

In FIG. 3, a stack of cups 206 is depicted in one of the cup dispensing sections 201 and in that cup dispensing section 201 a top plate has been removed to expose the internal components that facilitate the dispensing of an individual cup. Each of the cup dispensing sections 201 may support a stack of cups holding a different beverage ingredient. As noted above and described further below, when the cups are inserted into the machine 100, the cups are pre-filled with a beverage ingredient (e.g., coffee grounds, hot chocolate powder, tea, flavored water powder, soup base ingredients, etc.). Thus, when a beverage is selected by a consumer, a cup having the desired beverage ingredient is dispensed from the cup dispensing mechanism 200 and then either hot or cold water is added to create the beverage that is then provided to the consumer.

As described herein, in examples in which jetted water is used for a beverage, a predefined amount of water may be added (*e.g*., initially added) at a reduced or standard flow prior to adding the jetted water. The predefined amount of water may be an amount that is less than, equivalent to, or more than the amount of jetted water to be used in the beverage. The predefined amount of water at the reduced or standard flow may be a predefined volume of water, height of water, depth of water, and the like. For example, the predefined amount of water at the reduced or standard flow may be a layer (*e.g.,* a thin layer) of water that coats a portion of the exposed beverage ingredients within a receptacle or the entire exposed portion of the exposed beverage ingredients within a receptacle. By adding water to the beverage ingredients at a reduced or standard flow prior to jetting the water, the amount of beverage ingredient disturbed may be reduced when the jetted water is added. For example, by adding a predefined (*e.g.,,* predetermined) amount of water to the beverage ingredients at a reduced or standard flow before adding jetted water to the beverage ingredients, the amount of beverage ingredient dispersed (*e.g*., blown about the cup and/or out of the cup) when the jetted water is added may be reduced or eliminated.

In an example, one or more cup dispensing sections 201 may support a stack of cups holding a coffee ingredient therein, other cup dispensing sections 201 may support a stack of cups holding a mixture of coffee, sugar, and whitener, other cup dispensing sections 201 may support a stack of cups holding hot chocolate, other cup dispensing sections 201 may support a stack of cups holding tea, and/or other cup dispensing sections 201 may support a stack of cups that are empty (so that the cups can hold plain water). Two or more of the cup dispensing sections 201 may support a stack of cups holding the same ingredient in some examples, although each cup dispensing section 201 may support a stack of cups holding different ingredients in other examples, which may depend on the total number of cup dispensing sections 201 available and the total number of beverages desired to be generated by the system 1000.

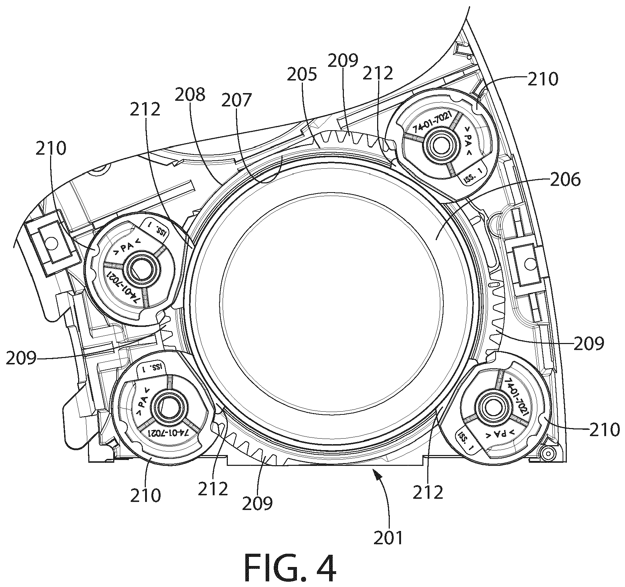

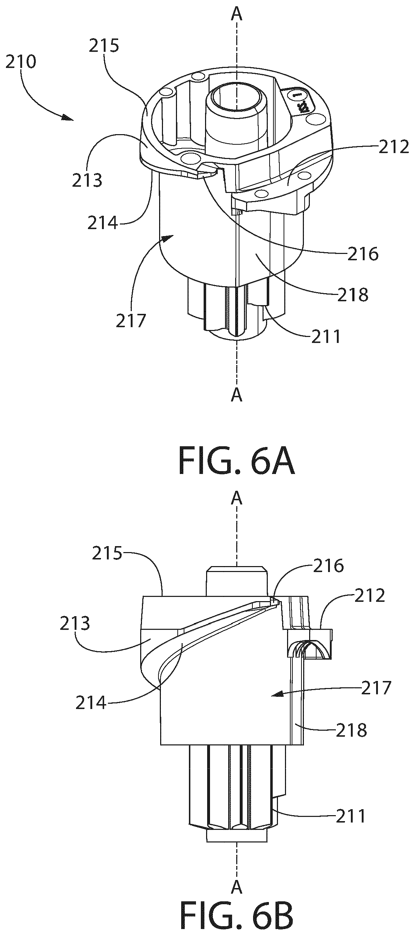

Referring to FIGS. 3 and 4, each of the cup dispensing sections 201 may include an opening 202 through which a cup is dispensed, four scrolls 210 that support the stack of cups and dispense the lowermost cup in the stack when desired (e.g., when a user pushes the button to dispense a beverage that is associated with a particular stack of cups), and a ring gear 205 that interacts with the four scrolls 210 as described further below to facilitate the dispensing of the cups. The four scrolls 210 are identical in structure in this embodiment, and the particular structure of the scrolls 210 will be described in greater detail below with reference to FIGS. 6A and 6B. In the example, there may be two outer scrolls 210 that are spaced apart by a first distance and two inner scrolls 210 that are spaced apart by a second distance that is less than the first distance. There may be more or less than four scrolls 210 in other examples, and the spacing between the scrolls 210 may be modified to be different than that which is shown. In FIG. 4, there is a cup or a stack of cups 206 positioned within the opening 202 of the cup dispensing section 201 that is shown in that figure.

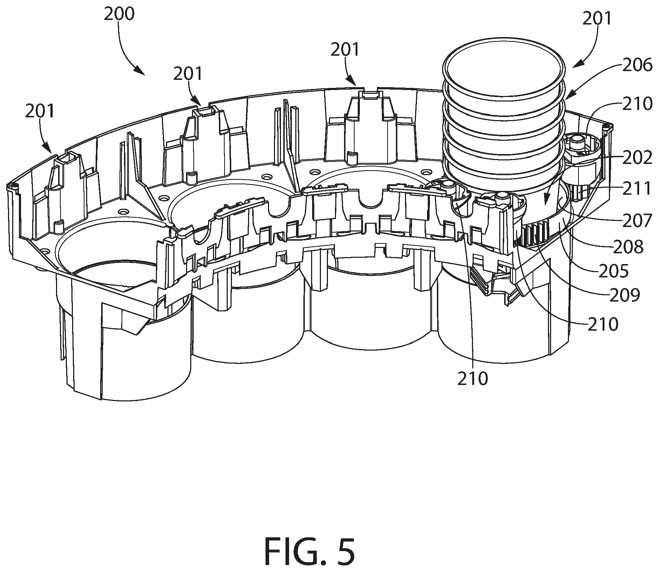

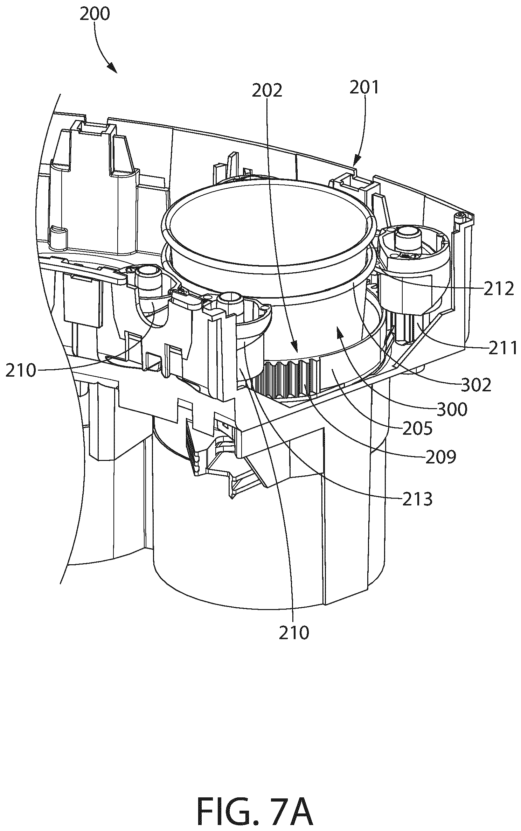

Referring to FIGS. 4 and 5, the ring gear 205 has an inner surface 207 that faces the opening 202 and an opposite outer surface 208. In an example, the inner surface 207 of the ring gear 205 may be smooth. The outer surface 208 of the ring gear 205 may include a plurality of sets of gear teeth 209 that are configured to interact with gear teeth 211 of the scrolls 210. In an example, there are four sets of the gear teeth 209 arranged in a spaced apart manner along the outer surface 208 of the ring gear 205 so that each set of gear teeth 209 is located in the vicinity of one of the scrolls 210. During operation, an actuator is coupled to the ring gear 205 and causes the ring gear 205 to rotate about a rotational axis (when a beverage associated with the particular cup dispensing section 201 is actuated/selected by a user/consumer). As the ring gear 205 rotates, the gear teeth 209 of the ring gear 205 engage the gear teeth 211 of the scrolls 210, thereby causing the scrolls 210 to rotate about a rotational axis. The rotation of the scrolls 210 causes a lowermost cup of the stack of cups 206 to be separated from the remainder of the stack of cups 206 and thereby dispensed. This operation of the cup dispensing mechanism 200 will be described in greater detail below with reference to FIGS. 7A-7F.

Once a particular beverage is selected by a consumer, the carousel 290 of the cup dispensing mechanism 200 rotates such that all of the cup dispensing sections 201 rotate in tandem. The carousel 290 of the cup dispensing mechanism 200 rotates until the cup dispensing section 201 containing a stack of cups having the beverage ingredient that is associated with the particular beverage selected by the consumer is aligned with an actuator (not shown) of the cup dispensing mechanism 200. Next, the actuator will actuate the ring gear 205 of that cup dispensing section 201 so that it rotates, which then causes the scrolls 210 of that cup dispensing section 201 to rotate, which causes dispensing of one of the cups held within that cup dispensing section 201 of the cup dispensing mechanism 200.

Referring to FIGS. 6A and 6B, the scrolls 210 will be described in detail. As noted above, each of the scrolls 210 includes a gear section having gear teeth 211 therein. The gear teeth 211 of the scrolls 210 interact with the gear teeth 209 of the ring gear 205 during operation to dispense a cup. Thus, each of the scrolls 210 is rotatable about a rotational axis A-A during this operation, the rotational axes A-A being parallel to a rotational axis of the ring gear 205 and to a rotational axis of the carousel 290.

The scroll 210 comprises a support ledge 212 that is configured to support a rim of a lowermost cup of a stack of cups, thereby supporting the entire stack of cups. The support ledge 212 is level or planar to facilitate the support of the rim of the cup as described herein. Specifically, referring briefly to FIGS. 4 and 5, the support ledges 212 of the four scrolls 210 collectively support the stack of cups 206 by the rim of the lowermost cup in the stack of cups 206 resting atop of the support ledges 212.

Referring back to FIGS. 6A and 6B, each of the scrolls 210 also comprises a cup splitter 213 protruding from an outer surface 217 of a main body 218 of the scroll 210. The cup splitter 213 is configured to force two adjacent cups in a stack of the cups (e.g., the lowermost cup and the second lowermost cup) to separate from one another so that the lowermost cup can be dispensed. The cup splitter 213 comprises a bottom surface 214 and a top surface 215. In an example, the top surface 215 of the cup splitter 213 is flat and the bottom surface 214 of the cup splitter 213 is inclined. The bottom surface 214 of the cup splitter 213 may be oriented oblique to the axis A-A. Stated another way, the cup splitter 213 may have a tip portion 216, and a height of the cup splitter 213 measured between the bottom and top surfaces 214, 215 of the cup splitter 213 increases as the cup splitter 213 extends circumferentially away from the tip portion 216. This is because the top surface 215 of the cup splitter 213 is flat and level (and perpendicular to the axis A-A) whereas the bottom surface 214 of the cup splitter 213 is inclined or angled. Thus, as the scroll 210 rotates, the cup splitter 213 wedges between the lowermost cup and the second lowermost cup to drive the lowermost cup downwardly away from the second lowermost cup so that the lowermost cup is dispensed.

Referring to FIGS. 7A-7F, the operation of the cup dispensing mechanism 200 will be described along with illustrations showing the dispensing of a lowermost cup 301 from a stack of cups 300. FIG. 7A illustrates one of the cup dispensing sections 201 of the cup dispensing mechanism 200 whereby the scrolls 210 are supporting the stack of cups 300.A rim 302 of the lowermost cup 301 of the stack of cups 300 rests on the support ledges 212 of the four scrolls 210. A bottom portion of the lowermost cup 301 (and some of the other cups in the stack of cups 300) extends through the opening 202 in the cup dispensing section 201.

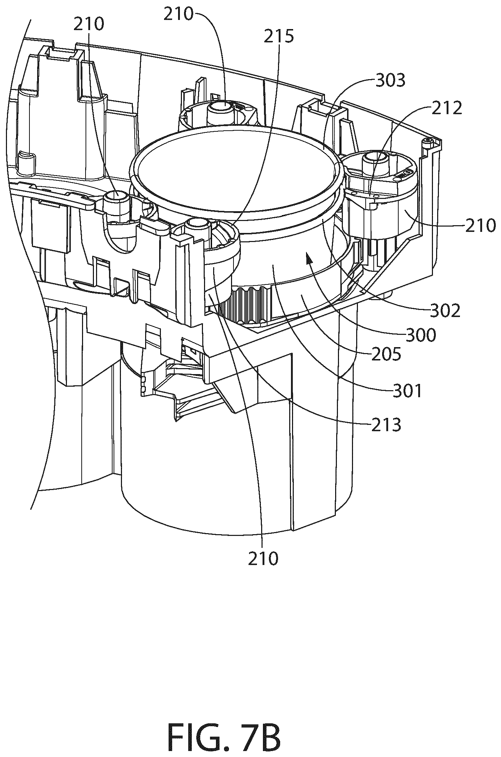

Referring to FIG. 7B, the same cup dispensing section 201 of the cup dispensing mechanism 200 is illustrated, but in FIG. 7B the ring gear 205 has rotated slightly in a clockwise direction and the scrolls 210 have rotated slightly in a counter-clockwise direction. Specifically, as the actuator (not shown) causes the ring gear 205 to rotate, the interaction between the gear teeth 209 of the ring gear 205 and the gear teeth 211 of the scrolls 210 causes the scrolls 210 to also rotate. As the scrolls 210 begin to rotate, the rim 302 of the lowermost cup 301 is no longer supported by the support ledges 212 of the scrolls 210. However, the stack of cups 300 remains supported by the scrolls 210 because upon this first degree of rotation the rim of the second lowermost cup 303 in the stack of cups 300 rests atop of the top surface 215 of the cup splitter 213 of the scrolls 210. The lowermost cup 301 remains attached to the second lowermost cup 303 due to friction between the cups.

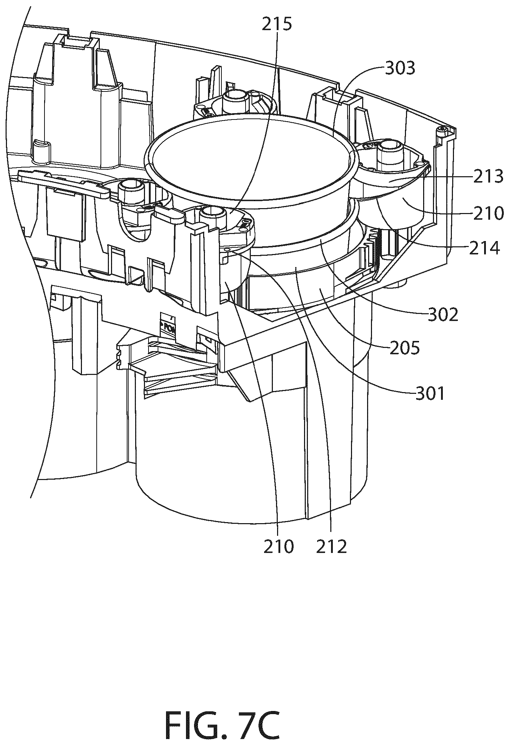

Referring to FIG. 7C, as the scrolls 210 continue to rotate in the counter-clockwise direction, the cup splitter 213 wedges itself in between the lowermost cup 301 and the second lowermost cup 303 to force the lowermost cup 301 to separate from the second lowermost cup 303 and be dispensed. Because the bottom surface 214 of the cup splitter 213 is angled, rotation of the scrolls 210 causes the lowermost cup 301 to be pushed downwardly away from the second lowermost cup 303. Specifically, as the scrolls 210 rotate the distance between the portion of the top surface 215 of the cup splitter 213 that supports the second lowermost cup 303 and the portion of the bottom surface 214 of the cup splitter 213 that is contacting the lowermost cup 301 increases, which increases the size of the space/distance between the lowermost cup 301 and the second lowermost cup 303. Eventually, there is insufficient friction between the lowermost cup 301 and the second lowermost cup 303 for the lowermost cup 301 to remain attached to the stack 300. Furthermore, at this time the lowermost cup 301 is not supported by the scrolls 210 or any other component of the cup dispensing mechanism 200. Thus, once a sufficient space is created between the lowermost cup 301 and the second lowermost cup 303, the lowermost cup 301 is dispensed through the opening 202.

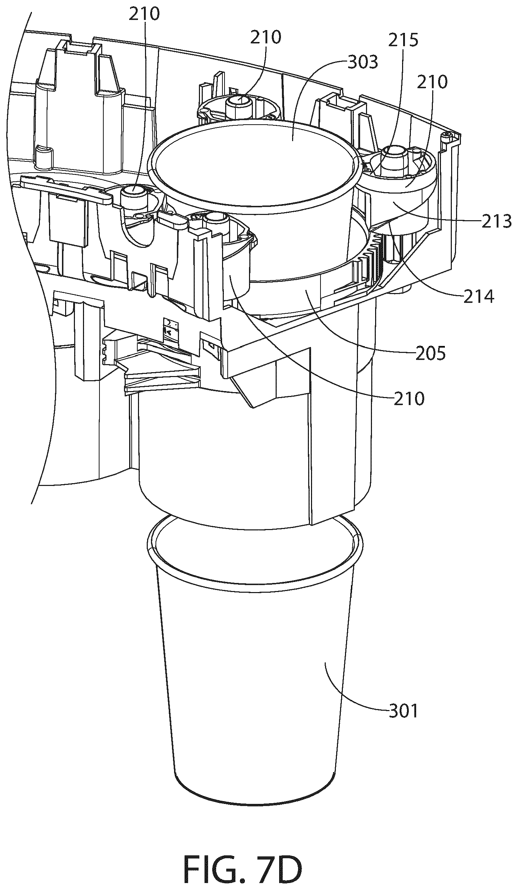

Referring to FIG. 7D, the lowermost cup 301 is illustrated having been separated from the second lowermost cup 303 such that the lowermost cup 301 is being dispensed through the opening 202. The lowermost cup 301 is then held by the delivery mechanism 450 as the fluid subsystem 500 injects water into the lowermost cup 301 to generate the desired beverage as the water mixes with the ingredient pre-filled in the lowermost cup 301. The lowermost cup 301 can then be presented to the consumer with the beverage therein, such as by rotating the delivery mechanism 450 as described above.

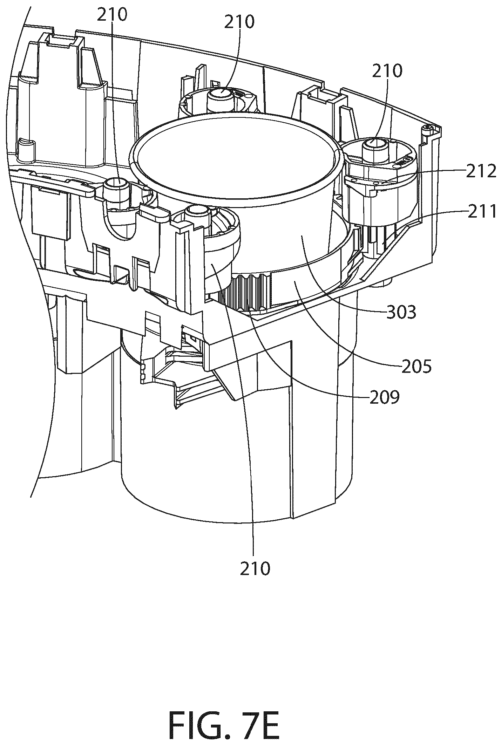

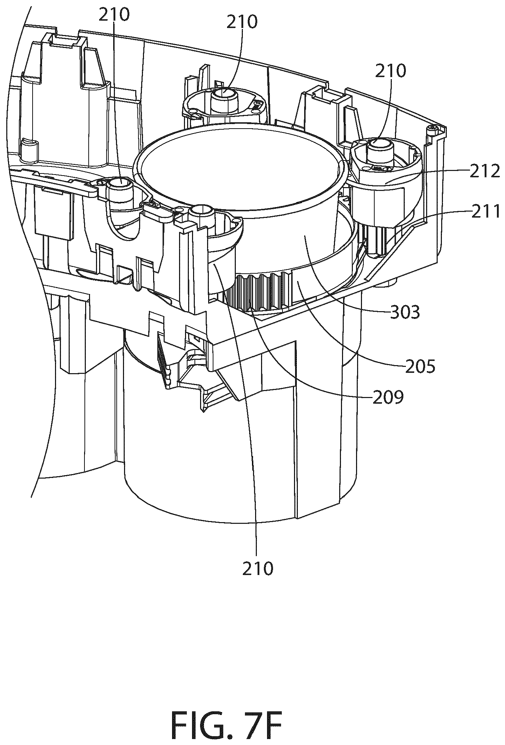

Referring to FIGS. 7E and 7F, once the lowermost cup 301 in the stack has been dispensed, the ring gear 205 is made to rotate in the opposite direction. Thus, during dispensing of the lowermost cup 301 from the stack the ring gear 205 was rotating in a clockwise direction and after dispensing of the lowermost cup 301 from the stack the ring gear 205 rotates in a counter-clockwise direction. The direction at which the ring gear 205 rotates could be opposite to that which is described herein. Specifically, the ring gear 205 is rotated in the opposite direction to reset the position of the ring gear 205 and of the scrolls 210 back to the position of FIG. 7A. Thus, the ring gear 205 and the scrolls 210 rotate back to the initial position whereby the previously denoted second lowermost cup 303 (which is now the lowermost cup because the previously denoted lowermost cup 301 has been dispensed) rests atop of the support ledges 212 of the scrolls 210. Similar to that which was described above, rotation of the ring gear 205 causes rotation of the scrolls 210 due to the interaction between the gear teeth 209 of the ring gear 205 and the gear teeth 211 of the scrolls 210.

In an example, the ring gear 205 and the scrolls 210 may not rotate a full 360°. Rather, the ring gear 205 and the scrolls 210 may rotate up to 300° in some examples, or up to any one of 290°, 280°, 270°, 260°, 250°, 240°, 230°, 220°, 210°, 200°, 190°, 180°, 170°, 160°, 150° in other embodiments. Specifically, the ring gear 205 and the scrolls 210 may rotate up to 300° (or any of the other distances) in the first direction during dispensing of the lowermost cup 301, and then the ring gear 205 and the scrolls 210 may rotate up to 300° (or any of the other distances) in a second direction that is opposite the first direction to "reset" back to the non-dispensing position.

Referring to FIG. 8, the fluid subsystem 500 will be described. The fluid subsystem 500 may include one or more components. For example, fluid subsystem 500 may include a chiller assembly 510 and a hot tank assembly 520 that are both operably coupled to a nozzle (such as dispense nozzle 504) via an arrangement of piping, tubing, or conduits so that hot or cold water can be dispensed into the cup 451 as needed to create a desired beverage. Although the figures provided herein may show fluid subsystems having one or more conduits connected to one or more inlets of a dispenser nozzle, it should be understood that the number of conduits and associated inlets of nozzle are non-limiting and are for illustration purposes only. For example, example subsystems may include four nozzles that couple to each of the four inlets of dispenser nozzle 504, as described herein.

Chiller assembly 510 may contain an amount of water at a cold temperature. For example, chiller assembly 510 may contain an amount of water at a temperature of between 0°C and 20°C, more specifically 4°C and 12°C, and more specifically approximately 8°C. The chiller assembly 510 may not hold water therein, but may cool water as the water passes therethrough during beverage generation. The hot tank assembly 520 may contain an amount of water at a hot temperature. For example, the hot tank assembly 520 may contain an amount of water at a temperature of between 70°C and 100°C, more specifically 80°C and 92°C, and more specifically 83°C and 89°C. The water at the hot temperature and/or the cold temperature may be received and/or dispensed by the nozzle, as described herein. The water may be received via a source. The source of the water may be a tank holding the water or a set of components, such as one or more conduits, heaters, chillers, and the like.

Conduits may include low pressure cold water dispense conduit 511 operably coupled to the chiller assembly 510 and to the dispense nozzle 504; the low pressure hot water dispense conduit 512 operably coupled to the hot tank assembly 520 and to the dispense nozzle 504; and the high pressure water dispense conduit 513 that is operably coupled to the chiller assembly 510 and to the hot tank assembly 520 as well as to the dispense nozzle 504. It should be appreciated that the use of the term conduit may include one conduit or multiple conduits that are fluidly and/or mechanically coupled together. One or more components may be located along the various components, as provided on FIG. 8.

As used herein, the terms "low pressure" and "high pressure" may be used to describe the pressure and/or the velocity of the water immediately downstream of the outlet of the dispense nozzle 504. In examples, a high pressure may include a number of bars of pressure, such as nine bars of pressure, fifteen bars or pressure, and the like. A low (*e.g*., standard) pressure may be a pressure less than nine bars of pressure or fifteen bars of pressure. For example, a low pressure may include four bars of pressure, six bars of pressure, *etc.* It should be understood, however, that these values of high and low pressure are for illustration purposes only and are non-limiting.

Further, the terms "low pressure" and "high pressure" may be used to describe pressures that are different relative to each other without being limited to specific values. Thus, it should be appreciated that water injected at high pressure is injected at a higher pressure and/or velocity than water injected at low pressure. The low pressure dispensing for the cold water may be a first pressure and/or a first velocity and the high pressure dispensing for the cold water may be a second pressure and/or a second velocity, with the second pressure being greater than the first pressure and/or the second velocity being greater than the first velocity. Similarly, the low pressure dispensing for the hot water may be a third pressure and/or a third velocity and the high pressure dispensing for the hot water may be a fourth pressure and/or a fourth velocity, the fourth pressure being greater than the third pressure and/or the fourth velocity being greater than the third velocity.

The conduits may include a main cold dispense conduit 514 extending from the chiller assembly to a divert valve 515 that diverts the main cold dispense conduit 514 into either the low pressure cold water dispense conduit 511 or the high pressure water dispense conduit 513. When cold water is being used, the cold water will flow from the chiller assembly 510 into the main cold dispense conduit 514, and from the main cold dispense conduit 514 either to the lower pressure water dispense conduit 511 or to the high pressure water dispense conduit 513 depending on whether the cold water should be dispensed at a low pressure or a high pressure. In either case, the water (*e*.*g*., water from main cold dispense conduit 514, high pressure water dispense conduit 513, low pressure cold water dispense conduit 511, and may be dispensed through a single nozzle, such dispense nozzle 504.

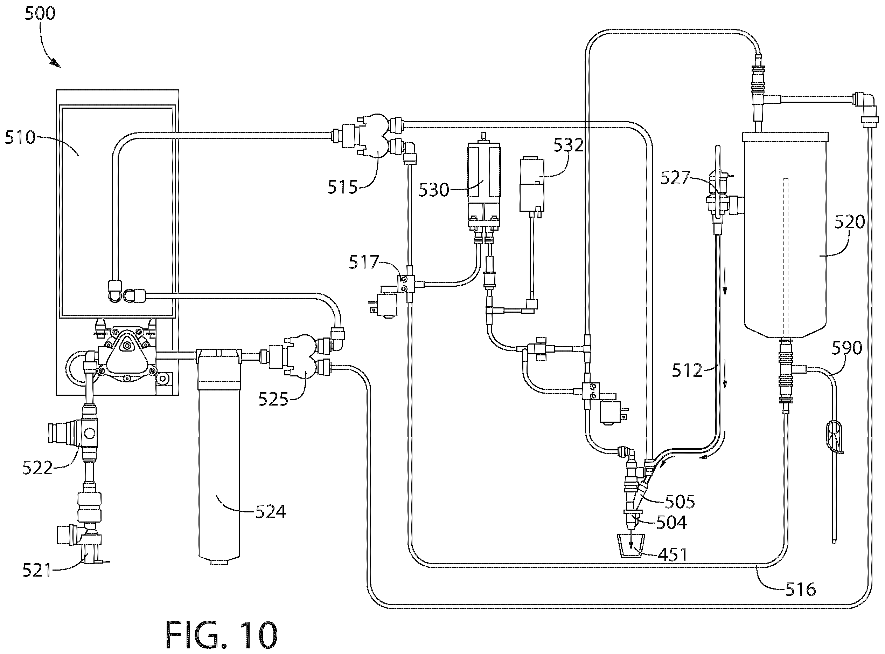

The conduits may include a hot water dispense conduit 516 that extends from the hot tank assembly 520 to a divert valve 517, which is coupled to the high pressure water dispense conduit 513. When the machine needs to dispense the hot water at a high pressure, the water flows from the hot tank assembly 520 through the hot water dispense conduit 516 to the divert valve 517, from the divert valve 517 to the high pressure dispense conduit 513, and from there to the dispense nozzle 504. When the machine 100 needs to dispense the hot water at a low pressure, the water flows from the hot tank assembly 520 through the low pressure hot water dispense conduit 512 to the dispense nozzle 504, as described herein with reference to FIG. 10. The hot tank assembly 520 may be coupled to low pressure hot water dispense conduit 512 via hot dispense valve 535.

The high pressure water dispense conduit 513 may be fluidly coupled to several components. For example, high pressure water dispense conduit 513 may be fluidly coupled a jet pump 530, a one-way check valve 531, an air pump 532, a pressure relief valve 533, and purge/jet valve 534. Additional components of the fluid subsystem 500 may include inlet valve 521, pressure regulator 522, chiller pump 523, water filter 524, inlet divert valve 525, drain tube 590, as well as others.

The fluid subsystem 500 may be configured to inject the water into the cup 451 in one or more (*e.g*., different) ways. As described herein, the fluid subsystem 500 can inject the water into the cup in one or more ways via a single dispense nozzle (such as dispense nozzle 504). For example, the fluid subsystem 500 can inject cold water into the cup 451 via the dispense nozzle 504 at a low pressure (e.g., at the first pressure and/or the first velocity). The fluid subsystem 500 can inject the cold water into the cup 451 via the dispense nozzle 504 at a high pressure (e.g., at the second pressure and/or the second velocity). The second pressure is greater than the first pressure and the second velocity is greater than the first velocity. The fluid subsystem 500 can inject the hot water into the cup 451 via the dispense nozzle 504 at a low pressure (e.g., at the third pressure and/or the third velocity). And the fluid subsystem 500 can inject the hot water into the cup 451 via the dispense nozzle 504 at a high pressure (e.g., at the fourth pressure and/or the fourth velocity). As described herein, the fourth pressure is greater than the third pressure and the fourth velocity is greater than the third velocity.

The pressure at which the water is injected may be dictated by the flow rate of the liquid and the cross-sectional area of the portion of the dispense nozzle 504 that the water passes through before entering the cup 451. For example, when the hot water is dispensed at the low pressure, it may be made to flow by gravity alone and it may flow through a portion of the dispenser having a larger cross-sectional area whereas when the hot water is dispensed at the high pressure, it may be made to flow by pump action and it may flow through a portion of the dispenser having a smaller cross-sectional area. As described herein, the dispense nozzle 504 may have a section with a reduced internal diameter such that the water that flows through that section will be dispensed at a higher pressure. Dispensing the water at a higher pressure may be desirable so that the water can cause a powder (such as milk powder) to foam for making beverages that require foam. Beverages that require foam include, for example, a cappuccino. An example dispense nozzle 504 that facilitates a multi-pressure dispensing through a single nozzle will be described below with reference to FIGS. 17A, 17B.

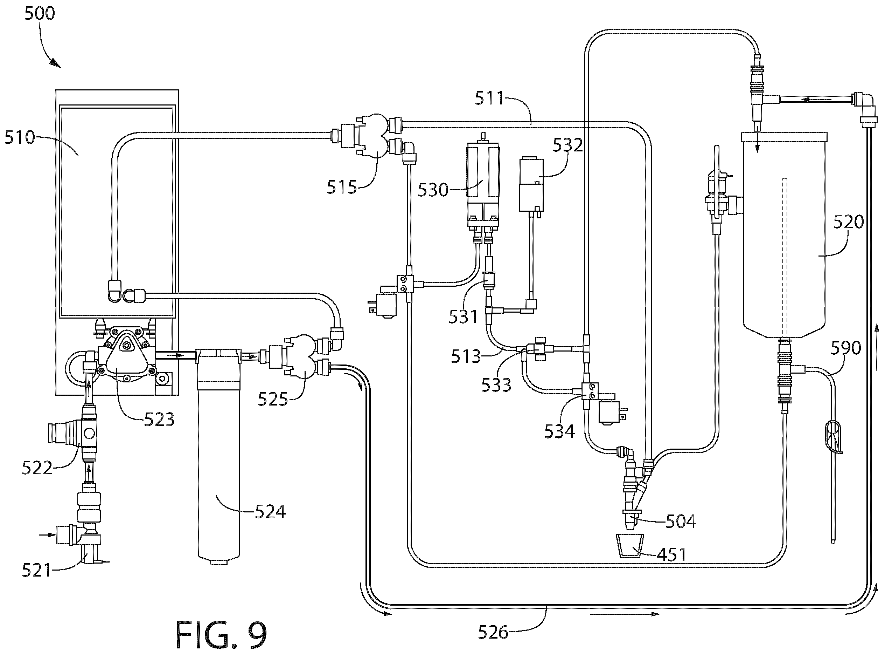

Referring to FIG. 9, subsystem 500 will be described in filling the hot tank assembly 520 with water. Arrows provided on FIG. 9 show the direction of water flow within the conduits during the filling of the hot tank. example, to fill the hot tank assembly 520, the water flows a mains water supply (*e.g*., downstream of an inlet valve 521) through the inlet valve 521, a pressure regulator 522, a water filter 524, an inlet divert valve 525 that diverts the incoming water to either the chiller assembly 510 or the hot tank assembly 520, and a hot water fill conduit 526. The water may bypass the chiller pump 523 during hot tank filling, although in other examples the chiller pump 523 may be activated. The hot water fill conduit 526 flows the water into the hot tank assembly 520. To flow the water in this manner, the chiller pump 523 is activated, the inlet valve 521 is opened, and the portion of the inlet divert valve 525 that permits the water to flow into the hot water fill conduit 526 is opened.

Referring to FIG. 10 subsystem 500 will be described in dispensing the hot water from the hot tank assembly 520 through the dispense nozzle 504 at a low pressure. Arrows provided on FIG. 10 show the direction of water flow within the conduits during the low pressure hot water dispensing. When a beverage or other food item made with the beverage machine 100 requires hot water to be dispensed at a low pressure, a hot dispense valve 527 is opened, which causes the water in the hot tank assembly 520 to flow through the low pressure hot water dispense conduit 512. The water may flow from the hot tank assembly 520 into the low pressure hot water dispense conduit 512 via gravity, as can be seen from the fact that there are no pumps located along the low pressure hot water dispense conduit 512. In examples, the water may be pumped. As described with respect to FIG. 17, the low pressure hot water dispense conduit 512 may be coupled to a first portion 505 of the dispense nozzle 504 having a first minimum cross-sectional area. Using this flow path, the hot water may be dispensed at the low pressure (and/or velocity) into the cup 451.

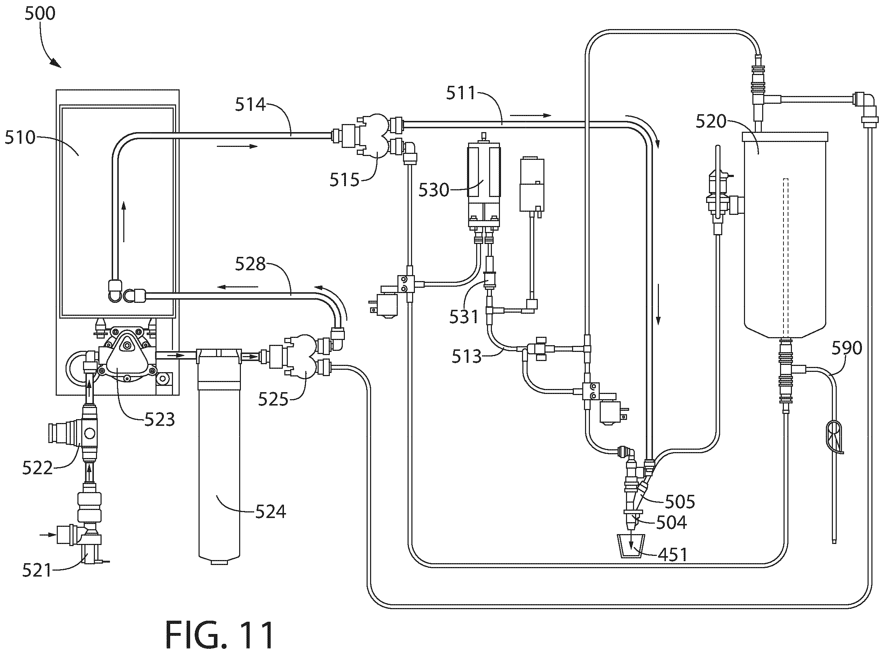

Referring to FIG. 11, subsystem 500 will be described in dispensing the cold water from the chiller assembly 510 through the dispense nozzle 504 at a low pressure. Arrows provided on FIG. 11 show the direction of water flow within the conduits during the low pressure cold water dispensing. example, if a drink selected by a consumer requires cold water to be injected into the cup 451 at a low pressure, the chiller pump 523 may be activated to pump water through the inlet valve 521, the pressure regulator 522, the water filter 524, the inlet divert valve 525, the cold water inlet conduit 528, and into and through the chiller assembly 510. From the chiller assembly 510, the water may be pumped into the main cold dispense conduit 514, through the divert valve 515, and through the low pressure cold water dispense conduit 511 to the dispense nozzle 504 where it is dispensed into the cup 451 below. The low pressure cold water dispense conduit 511 is coupled to the first portion 505 of the dispense nozzle 504 just like the low pressure hot water dispense nozzle 512. Thus, using this flow path, the cold water is dispensed at the low pressure into the cup 451.

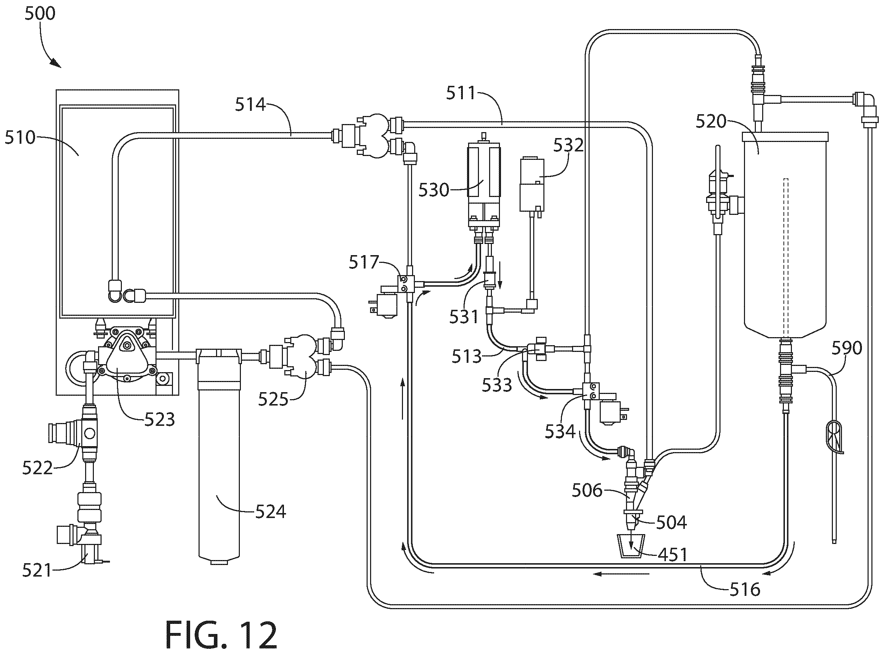

Referring to FIG. 12, subsystem 500 will be described in dispensing the hot water from the hot tank assembly 520 through the dispense nozzle 504 at a high pressure. Arrows provided on FIG. 12 show the direction of water flow within the conduits during the high pressure hot water dispensing. For example, if a drink selected by a consumer requires hot water to be injected into the cup 451 at a high pressure (such as, to foam a milk powder or the like), the divert valve 517 is opened to allow water to flow from the hot water dispense conduit 516 into the high pressure water dispense conduit 513. Next (or simultaneously) the jet pump 530 may be activated to pump the water from the hot tank assembly 520 through the hot water dispense conduit 516 and into the high pressure water dispense conduit 513.

From the high pressure water dispense conduit 513, the water flows into a second portion 506 of the dispense nozzle 504. The second portion 506 of the dispense nozzle 504 has a second minimum cross-sectional area which is less than the first minimum cross-sectional area of the first portion 505 of the dispense nozzle 504. Due to this smaller cross-sectional area of the second portion 506 of the dispense nozzle 504 and/or because the water is being pumped rather than fed by gravity, the water flowing along the pathway shown in FIG. 12 exits the dispense nozzle 504 with a higher pressure and velocity than the water flowing along the pathway shown in FIG. 10 and described herein.

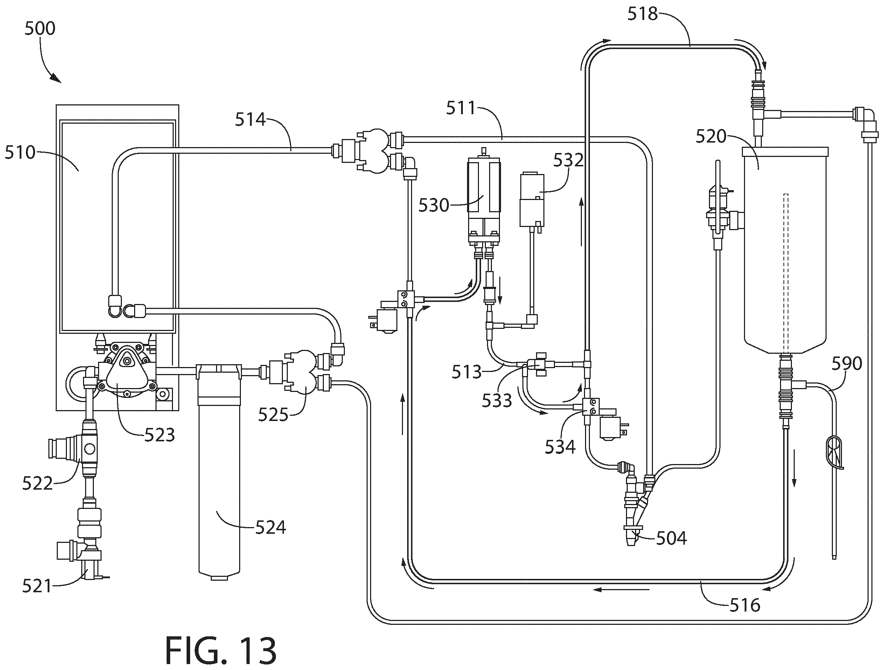

Referring to FIG. 13, subsystem 500 will be described in purging the hot water high pressure flow path shown and described with reference to FIG. 12. Arrows provided on FIG. 13 show the direction of water flow within the conduits during the purge. The arrows show the direction of water flow. The flow path shown in FIG. 13 is identical to that shown in FIG. 12 except the purge/jet valve 534 prevents the water from flowing to the dispense nozzle 504 but instead forces it to flow through a recirculation conduit 518 and back into the hot tank assembly 520. The purge cycle can also be used to sanitize the jet system by taking water from the hot tank 520 and running it through the system and returning it to the hot tank 520 with a small flush cycle to the nozzle 504. Any water returned to the hot tank 520 may subsequently be pasteurized.

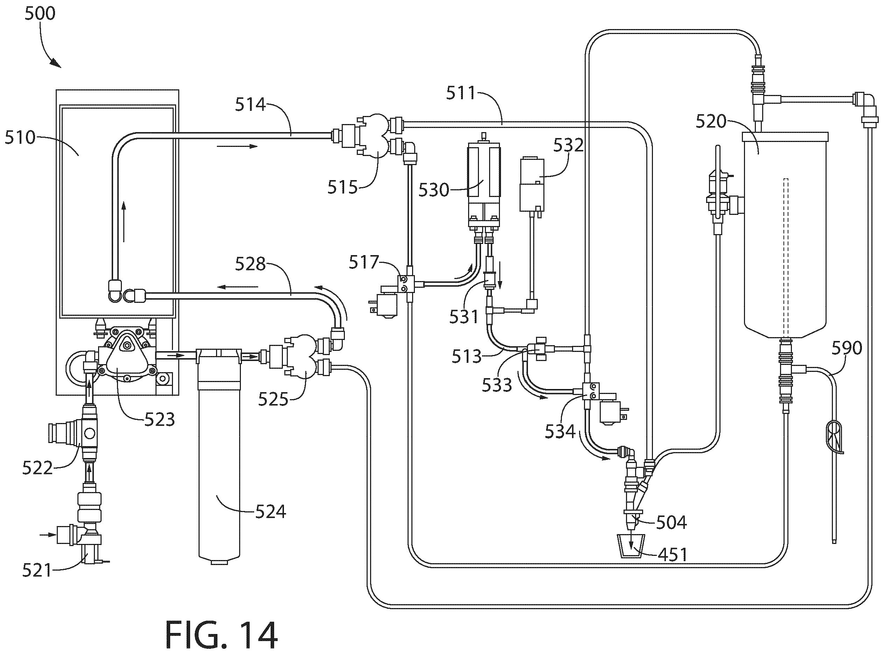

Referring to FIG. 14, subsystem 500 will be described in dispensing the cold water from the chiller assembly 510 through the dispense nozzle 504 at a high pressure. Arrows provided on FIG. 14 show the direction of water flow within the conduits during the high pressure cold water dispensing. example, if a drink selected by a consumer requires cold water to be injected into the cup 451 at a high pressure, the chiller pump 523 is activated and the divert valves 515, 517 are altered so that the water flows through the inlet valve 521, the pressure regulator 522, the chiller pump 523, the water filter 524, the inlet divert valve 525, the cold water inlet conduit 528, into the chiller assembly 510, through the main cold dispense conduit 514, past the diverter valve 515 and into the cold water jet introduction conduit 519, through the diverter valve 517 and into the high pressure dispense conduit 513 to and through the second portion 506 of the dispense nozzle 504.

As described herein, the second portion 506 of the dispense nozzle 504 has a second minimum cross-sectional area which is less than the first minimum cross-sectional area of the first portion 505 of the dispense nozzle 504. Due to this smaller cross-sectional area of the second portion 506 of the dispense nozzle 504 and the fact that the water is being pumped by the chiller pump 523 and the jet pump 530, the water flowing along the pathway shown in FIG. 14 exits the dispense nozzle 504 with a higher pressure and velocity than the water flowing along the pathway shown in FIG. 11 and described herein.

In some examples, when a high pressure injection of water is to be used as described above with regard to FIG. 12 (hot water) and FIG. 14 (cold water), an initial shot of water at low (*e.g.,* standard) pressure (*e.g.,* water flow) is injected (*e.g*., injected first). The initial shot of water covers a portion of the ingredients, a layer (*e.g.,* the top layer) of the ingredients, and the like. The initial shot of water at the standard flow is provided for a predefined duration, a predefined volume of water, or a predefined height within the receptacle holding the beverage ingredients. A predefined delay (*e.g.,* a delay between three-quarters of a second to three seconds, such as 1 second, although the delay may be shorter or longer in examples) follows the initial shot of water. The predefined delay (*e.g.,* the delay between the first water shot and the initiation of jetting) may improve the solubilization and/or mixing of beverage ingredients, such as powdered ingredients

Upon expiration of the predefined delay, the predefined volume of water, and/or the initial shot of water reaching a predefined height within the receptacle, water is provided at a jetted water flow (*e.g.,* high pressure).

Providing an initial shot of water at low pressure (*e.g*., to cover ingredients), followed by a delay before jetting with high pressure may provide many benefits over conventional systems. For example, by covering the beverage ingredients (*e.g*., powder ingredients) with an initial shot of water at low pressure, the dispersion of the beverage ingredients (*e.g*., powder ingredients) upon a jetting of water may be mitigated or eliminated. In addition to reducing or eliminating the dispersion of the beverage ingredients, following an initial shot of water a low pressure with a jetted water may provide better mixing of beverage ingredients, foam creation, and the like.

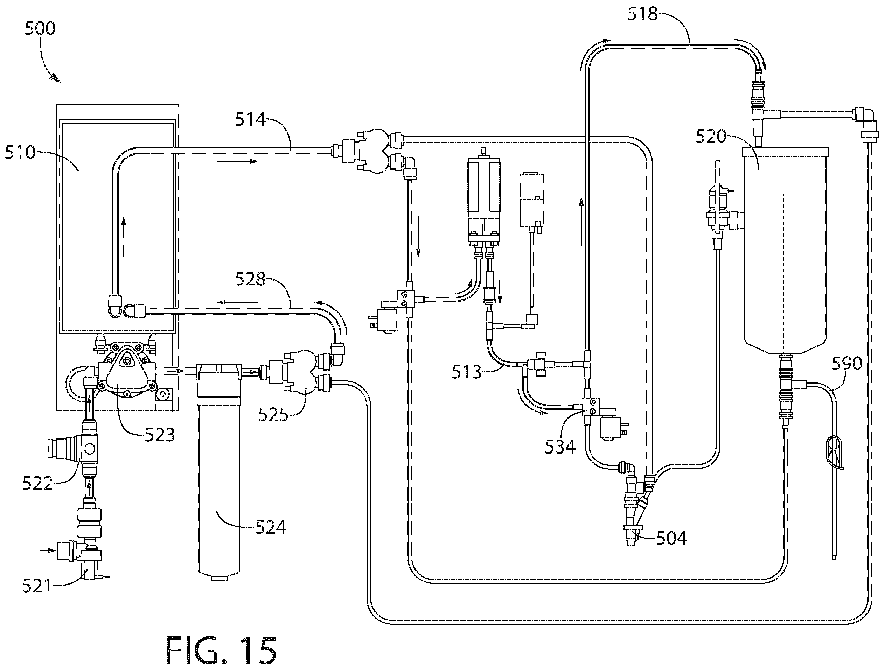

Referring to FIG. 15, a process will be described for purging the cold water high pressure flow path shown and described with reference to FIG. 14. The conduits that are highlighted are those that are used during the purge process and the arrows show the direction of water flow. The flow path shown in FIG. 15 is identical to that shown in FIG. 14 except the purge/jet valve 534 prevents the water from flowing to the dispense nozzle 504 but instead forces it to flow through the recirculation conduit 518 and into the hot tank assembly 520.

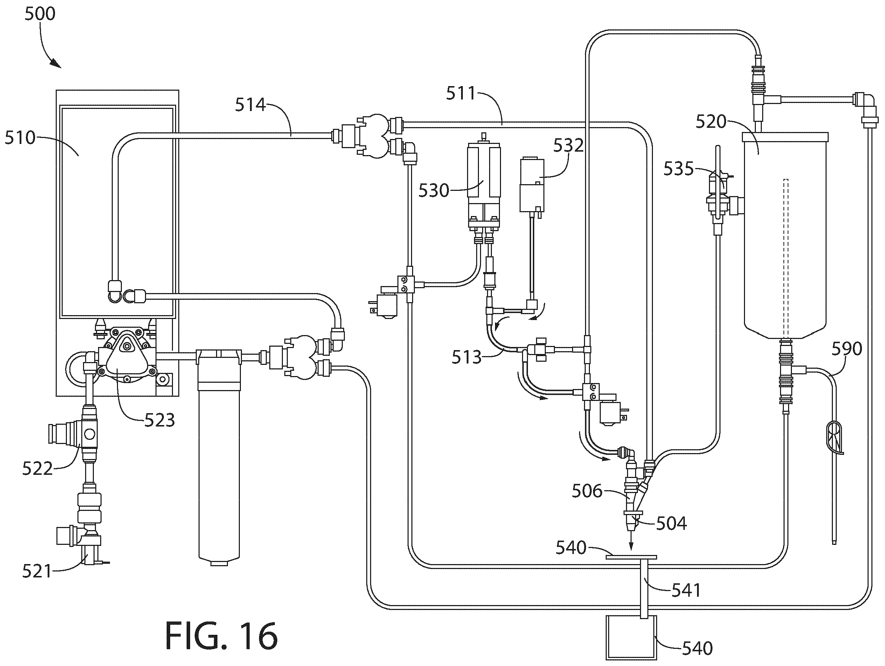

There may be a desire or need to dewater the fluid subsystem at the end of a vend (e.g., at the end of the generation of a beverage). The dewatering may be provided to drive out water remaining in the conduits. FIG. 16 illustrates an example dewatering with respect to fluid subsystem 500. In examples the dewatering may be achieved by introducing air into the fluid subsystem 500 to force flow of the water therethrough, as described herein. The dewatering may provide several benefits, such as one or more of: (1) restoring the fluid subsystem to a known state with respect to the volume of water left in the feed pipes; (2) reducing the build-up of scale (*e.g*., residual water left and open to atmosphere will evaporate leaving the minerals that can build up within a system and cause blockages in the conduits); (3) maintaining system hygiene (such as hygiene of water downstream of filters and/or water within one or more components (*e.g.,* a boiler) that cannot be re-sanitized); or (4) giving a consistent temperature delivery, as water left in pipes downstream of the boiler may cool and impact the temperature of the initial water shot).

As shown in FIG. 16, the dewatering may include activating the air pump 532 that is positioned along the high pressure dispense conduit 513 to force any water left in the high pressure dispense conduit 513 to flow therealong towards the dispense nozzle 504. As a result of this process, any water in the high pressure dispense conduit 513 that is downstream of the jet pump 530 is made to flow to the dispense nozzle 504. The water that flows to the dispense nozzle 504 during the dewatering may flow into a cup if a cup remains positioned below the dispense nozzle 504. However, in preferred embodiments the fluid subsystem 500 is not dewatered until after a user has removed the cup with the vended beverage therein from the beverage pick-up zone of the machine 100. Thus, the water flowing out the dispense nozzle 504 during the dewatering does not end up in the user's cup for drinking, but is simply expelled from the fluid subsystem 500.

In that regard, and as described herein, the machine 100 may include a drip tray 540 in the drink delivery area beneath the dispense nozzle 504. The drip tray 540 may be fluidly coupled to the container 540 (e.g., the slop bucket) via a drain conduit 541. For example, if there is no cup positioned on the drip tray 540 beneath the dispense nozzle 504 during the dewatering, the water that is dispensed from the dispense nozzle 504 during the dewatering will flow through the drip tray 540, into and through the drain conduit 541, and into the container 540 where it can later be disposed of. In examples, there may be a delay after a beverage is vended and before the dewatering takes place. In examples it may be desirable to delay the dewatering of the fluid subsystem 500 until the cup with beverage has been removed from the collection area by the user and the delivery mechanism 450 has rotated back inside the machine 500. Such activity may be achieved using sensors to determine whether the cup has been removed, using a timer, or the like. After this point the high pressure dispense conduit 513 can be dewatered safely and in a controlled way with the water fed into the container 540 (e.g., the collection bucket or the slop bucket). Although the dewatering may be delayed until the delivery mechanism 450 has rotated back inside the machine 100 (after the cup is removed from the delivery mechanism 450, the delivery mechanism 450 rotates back into the machine 100), this is not required in all examples and the dewater could occur directly after the user has removed the cup with beverage and even before the delivery mechanism 450 has rotated back inside the machine 100.

As described herein, a downside of the dewatering may include the last of the water leaving the system may splatter out of the dispense nozzle 504. Splattering may occur because there is a mix of air and water exiting the dispense nozzle 504 (*e.g.,* exiting simultaneously) when the last of the water leaves the system. The splattering may cause: (1) a mess around the drink delivery area of the beverage vending machine; (2) uncontrolled splashing/splattering onto the surface of the beverage, which may affect the quality of the foam/crema; and/or (3) hot water splashing in areas where human hands could be present. The design of dispense nozzle 504 may eliminate such splattering, as described herein.

Referring to FIG. 17A, an example dispensing nozzle (*e.g*., dispense nozzle 504) will be described. The dispense nozzle 504 may include a first portion 505 and a second portion 506. The dispense nozzle 504 may include a third portion 507 positioned so that the water exiting the first and second portions 505, 506 enters into the third portion 507 prior to the water exiting the dispense nozzle 504. The third portion 507 may be downstream of one or more (*e.g.,* each) of the first and second portions 505, 506. The third portion of the dispense nozzle 504 may include an outlet 508 of the dispense nozzle 504 through which the water may exit the dispense nozzle 504 to be injected into a cup or into the drip tray when a cup is not located on the drip tray such as during dewatering. In an example, the second portion 505 of the dispense nozzle 504 may be coaxial with the third portion 507 of the dispense nozzle 504. The first portion 505 of the dispense nozzle 504 may be oriented at an oblique angle relative to the third portion 507 of the dispense nozzle 504.

The first portion 505 of the dispense nozzle 504 may define an internal passageway having a first cross-sectional area. The second portion 506 of the dispense nozzle 505 may define an internal passageway having a second cross-sectional area. The third portion 507 of the dispense nozzle 505 may define an internal passageway having a third cross-sectional area. The first cross-sectional area may be greater than the second cross-sectional area in examples. The third cross-sectional area may be greater than the second cross-sectional area. The first and third cross-sectional areas may be the same, or either one may be slightly larger than the other in examples.

During use of the fluid subsystem 500, the water that flows through the first portion 505 of the dispense nozzle 504 may be dispensed from the dispense nozzle 504 at the low pressure or low velocity. The water that flows through the second portion 506 of the dispense nozzle 504 may be dispensed from the dispense nozzle 504 at the high pressure or high velocity. The water that flows through the second portion 506 of the dispense nozzle 504 may be dispensed from the dispense nozzle 504 at the high pressure or high velocity because, in part, the cross-sectional area of the internal passageway of the second portion 506 is smaller than the cross-sectional passageway of the internal passageway of the first portion 505. The water that flows through the second portion 506 of the dispense nozzle 504 may be dispensed from the dispense nozzle 504 at the high pressure or high velocity due to the flow rate of the water flowing into the first portion 505 as compared to the second portion 506 (e.g., due to the water flowing via gravity or pumping at different pressures).

An outlet 509 of the second portion 506 of the dispense nozzle 504 may be upstream of the outlet 508 of the dispense nozzle 504. During the dewatering, the water being removed from the fluid subsystem 500 may flow through the second and/or third portions 506, 507 of the dispense nozzle 504. The high pressure nozzle (e.g., the second portion 506 of the dispense nozzle 504) may be shielded by being located inside and/or upstream of the larger third portion 507 of the dispense nozzle 504. The third portion 507 having a cross-sectional area that is greater than the cross-sectional area of the portion 506 and/or outlet 509 may serve as a shield when the fluid is dispensed from outlet 509. As the shield is positioned below the high pressure jet, splatter radiating outwards from outlet 509 may be contained by the shield. The splatter contained by the shield may run down the inside of the shield and drop vertically downwards (*e.g*., downwards toward outlet 508). The splatter (*e.g*., free-falling splatter contained by the shield) may fall into the beverage vessel (*e.g*., receptacle, cup) to be consumed by the user and may not be directed to the drip tray or countertop, which may result in reduced mess. In an example, if the dewatering might impact the quality of the foam produced, the beverage dispenser may allow the cup to be removed (*e.g*., removed first) and the dewatering may be directed into the drip tray. In such example, the shielding may reduce the splattering to the tray (*e.g.,* not the surrounding counter).

The distance from outlet 509 to outlet 508 may result in a reduced (or elimination of) splattering of water leaving the second portion 506. The cross section of outlet 509 being larger than the cross section of second portion 506 may result in a reduced (or elimination of) splattering of water leaving the second portion 506. For example, as the system is being dewatered, splattering (*e.g*., splattering) of water that may occur at the end of the dewatering cycle as the water is mixed with air may occur (*e.g*., mostly occur) at the outlet 509 of the second portion 506 of the dispense nozzle 504 rather than at the outlet 508 of the dispense nozzle 504. The splattering (*e.g*., splattering) water may fall vertically downwards from the outlet 509 of the second portion 506 of the dispense nozzle 504 to and through the outlet 508 of the dispense nozzle 504. As a result, mess (*e.g*., splashing of water) typically produced by conventional nozzles will be reduced and/or prevented, as the water leaving the dispense nozzle 504 through the outlet 508 will not splatter (*e.g*., splatter).

Referring to FIG. 17B, another example dispense nozzle 504 is illustrated in cross-section to illustrate the various areas of the sections of the interior passageway. In the nozzle of FIG. 17B, the hot and cold water may enter (*e.g.,* may both enter) the dispense nozzle 504 through an opening (*e.g.,* the same opening). The opening in which the hot and hot water may enter is indicated as jet flow opening 550 when the water is being injected as a jet (e.g., at high pressure/velocity). The cold water may enter the dispense nozzle 504 through the low flow opening 551 when the cold water is being injected at low pressure. The hot water may enter the dispense nozzle 504 through the low flow opening 552 when the hot water is being injected at low pressure. The hot and/or cold water conduits for the low pressure injection may be combined upstream of the dispense nozzle 504 to reduce the number of openings into the nozzle, although in examples additional openings may be provided (*e.g.*, to provide additional conduits for low flowing, jet flowing, hot, and cold water provided to the dispense nozzle 504).

Benefits may be provided if the openings are kept separate. For example, providing separate openings 551, 552 may reduce component count for the fluid subsystem 500, minimize turbulence in the line (which may be an issue for the hot dispense), and reduce heat transfer which may occur if both hot and cold water were flowing through the same conduits. It should be understood that the positioning and the number of openings shown in the drawings are for illustration purposes only. The positions of the openings 551, 552 and/or the number of openings 551, 552 may be modified from that which is shown in some examples. Moreover, although the dispense nozzle 504 is shown as being formed from distinct components, in other examples the dispense nozzle 504 may be a one-piece unitary structure.

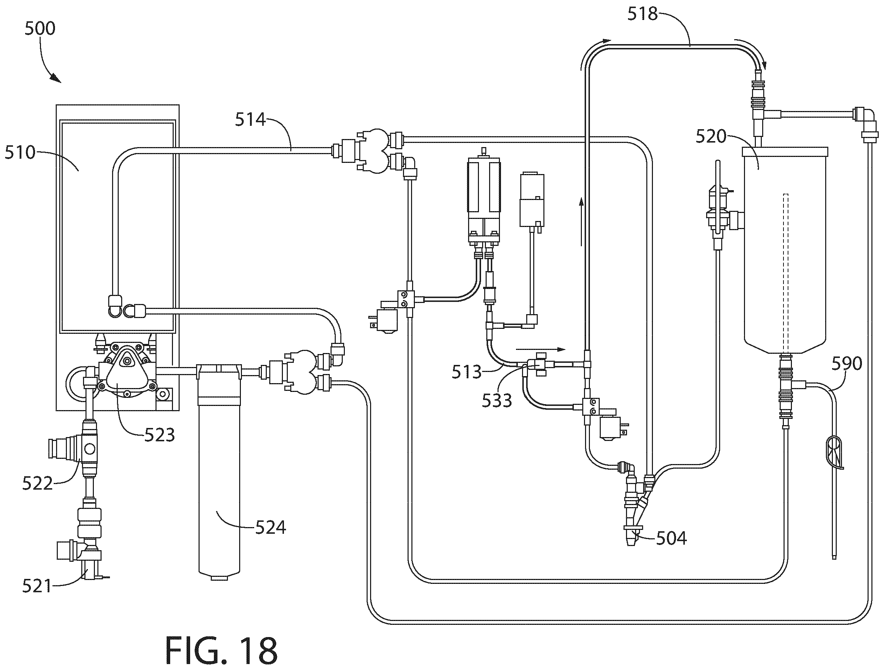

FIG. 18 illustrates how the fluid subsystem 500 may deal with an overpressure situation by pumping the water out of the high pressure dispense conduit 513 and into the recirculation conduit 518. For example, upon an overpressure situation, the pressure relief valve 533 may open so that the water can flow to the recirculation conduit 518.

Air pump 532 may be used to mix additional air with water during a beverage vending procedure, may allow for the creation of additional beverage types. In an example, the hot tank 520 is vented to the atmosphere. In other examples, the hot tank 520 may not be vented so that the fluid subsystem 50 may operate as a closed system. The fluid subsystem 500 may use an open loop duration control for activation of the jet cycle to control drink volume. For example, the fluid subsystem 500 may activate for set periods of time during the jet cycle rather than being a specific volume control.

A flow meter may be positioned on the inlet to the jetting pump to calibrate and/or measure drink volumes in other examples. The fluid subsystem 500 may enable jetting (high pressure) and existing (low pressure) water systems to be combined which provides higher flow rate and a different exit pattern, such as low pressure combined with a jet centre. The fluid subsystem 500 may be capable of injecting water at high pressure and low pressure (*e.g*., injecting water at high pressure and low pressure simultaneously), with various combinations of hot and cold water. Such features may increase the beverage making possibilities including allowing for more beverages to be made and increasing the quality of the beverages made.

FIG. 19 shows an example fluid subsystem in which a device (*e.g.,* a pump) may not be used to provide (*e.g*., pump) hot and/or cold water to a beverage. For example, pump 530 may not be used to provide a cold jet shot. The cold water (*e.g.,* cold jetted water) may be provided via an inlet water pressure. Although FIG. 19 shows the pump not being used for cold jetted water, it should be understood that such example is for illustration purposes only. For example, a pump may not be used to provide jetted hot water. By avoiding the use of the pump, temperature fluctuations of the conduits (*e.g*., from previous vends) may not impact current vends. For example, conduits using pump during prior vends may be heated or cooled, depending on whether the vend is a cool beverage or a hot beverage. If the prior beverage is a hot beverage, for example, the temperature of a current cold beverage using the same conduit(s) may be affected by the hot beverage. By avoiding the pump (and accompanying conduits), the possibility of the current beverage being affected by the temperature of the prior beverage is reduced or eliminated.

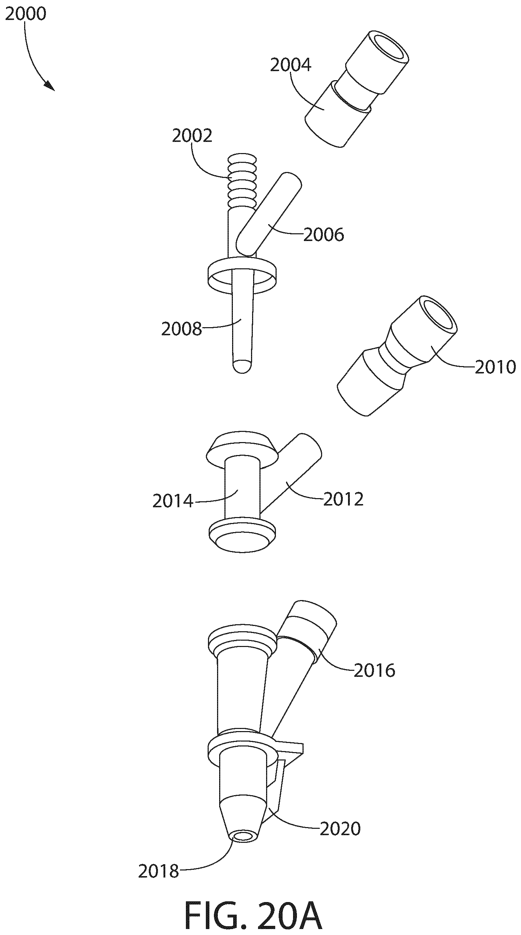

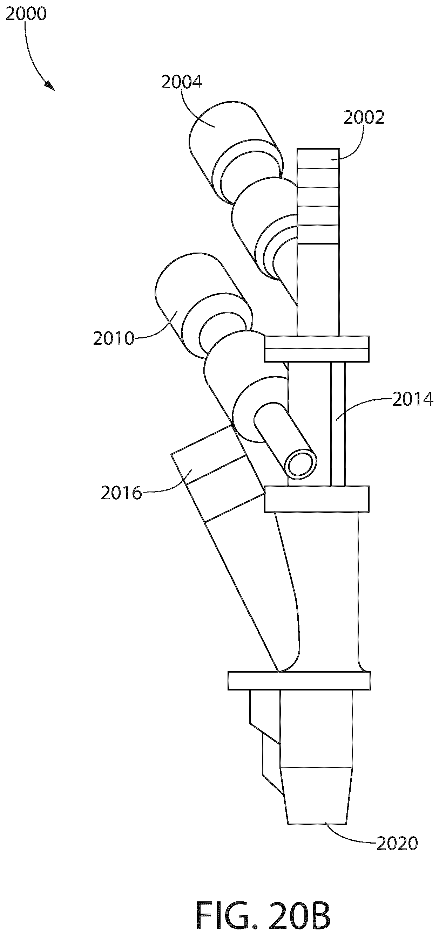

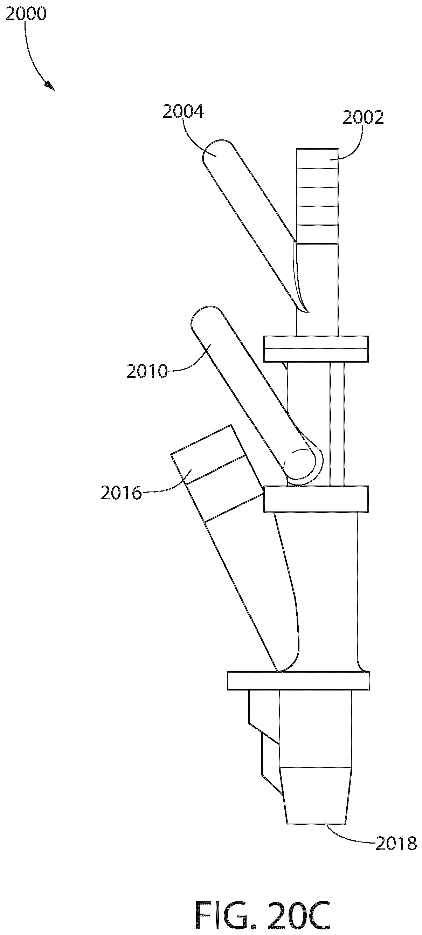

FIGS. 20A-20E show another example dispensing nozzle, shown as dispensing nozzle 2000. FIG. 20A shows dispensing nozzle 2000 in a disassembled configuration. FIGS. 20B and 20C show dispensing nozzle 2000 in an assembled configuration. Dispensing nozzle 2000 includes four inlets, although in examples dispensing nozzle could include more or less than four inlets. The inlets receive fluid (*e.g.,* water) that is received by the nozzle 2000 and/or serve as a passageway for the received fluid. For example, the inlets may receive hot and/or cold water, jetted flow fluid, standard flow fluid, and the like. Jetted flow fluid may include fluid flowing at a high pressure or a high velocity, as described herein. Standard flow fluid may include fluid flowing at a low pressure or a low velocity, as described herein. The flow rate of a fluid (*e.g.,* water) may include a measurement of how much fluid (*e.g.* water) passes through the nozzle. The flow rate of a fluid may be increased via a pump and/or via a decreased internal passageway of the nozzle, as described herein. In an example, the flow rate may be between 250 and 500 grams per 30 seconds (g/30s), and more particularly between 200 and 280 g/30s. A jetted flow rate may be 300 g/30s, and a standard flow rate may be less than the jetted flow rate, such as 20 g/30s. It should be understood that such examples are for illustration purposes only and are non-limiting.

As shown on FIGS. 20A-20C, dispensing nozzle 2000 may include hot jetted flow inlet 2002, cold jetted flow inlet 2004, cold standard flow inlet 2010, and hot standard flow inlet 2016. Hot jetted flow inlet 2002 and cold jetted flow inlet 2004 may be collectively referred to as jetted inlets. Although hot jetted flow inlet 2002 and cold jetted flow inlet 2004 may be jetted inlets, hot jetted flow inlet 2002 and cold jetted flow inlet 2004 may relate to fluids that flow at pressures or velocities that differ from one another. Hot standard flow inlet 2016 and cold standard flow inlet 2010 may be collectively referred to as standard flow (or low flow) inlets. Although hot standard flow inlet 2016 and cold standard flow inlet 2010 may be standard inlets, hot standard flow inlet 2016 and cold standard flow inlet 2010 may relate to fluids that flow at pressures or velocities that differ from one another. In examples, fluid related to one or more of hot jetted flow inlet 2002, cold jetted flow inlet 2004, hot standard flow inlet 2016, and cold standard flow inlet 2010 may flow at variable rates. For example, fluid relating to hot standard flow inlet 2016 may flow at variable flow rates.

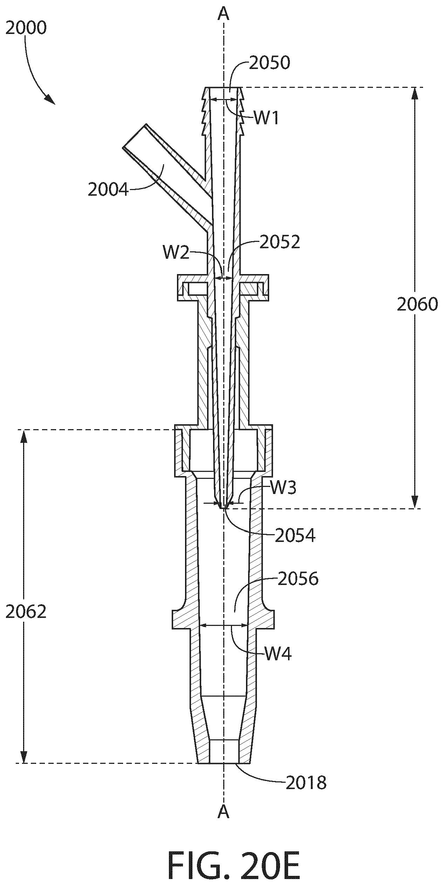

The jetted inlets may receive fluid (*e.g.,* water) at a high pressure and/or a high velocity. The jetted inlets may receive fluid that is provided at a high pressure and/or a high velocity via a pump (pump 530). Jetted inlets may also, or alternatively, be associated with structural features that may result in a jetted flow. For example, the jetted inlets may be associated with one or more conduits that have an outlet including a cross-section (*e.g.,* width) that is small (*e.g.,* smaller than one or more portions of the conduit). An example is the small cross-section (*e.g*., width W3), shown on FIG. 20E, as width W3 is smaller than width W2. The fluid flowing through width W2 of second portion 2052 and pushing through the outlet of third portion 2054 having width W3 may result in the fluid exiting the outlet of second portion 2053 at an increased (*e.g*., high) pressure.

The standard inlets may receive fluid at a pressure and/or velocity that is less than the jetted inlets. For example, the standard inlets may receive fluid that is not provided via a pump (*e.g.,* pump 530). It should be understood that the configuration of the hot, cold, standard flow, and/or jetted flow inlets are for illustration purposes only. The inlets may be arranged in other configurations.

Upon entering dispensing nozzle 2000, fluid may move within one or more shafts and/or one or more portions, such as first portion 2050, second portion 2052, third portion 2054, fourth portion 2056, first shaft 2008, second shaft 2014, and/or third shaft 2020. One or more of the portions may be axial portions and/or one or more of the shafts may be axial shafts. For example, fluid received via hot jet inlet 2002 and/or cold jet inlet 2004 may flow into first portion 2050, second portion 2052, third portion 2054, and fourth portion 2056. Fluid received via hot standard inlet 2016 and/or cold standard inlet 2010 may flow into (*e.g.,* only flow into) fourth portion 2056. As described herein, an example definition of the term flow may include the direction in which fluid moves, for example, from one or more inlets, conduits, passageways to one or more other conduits or passageways.

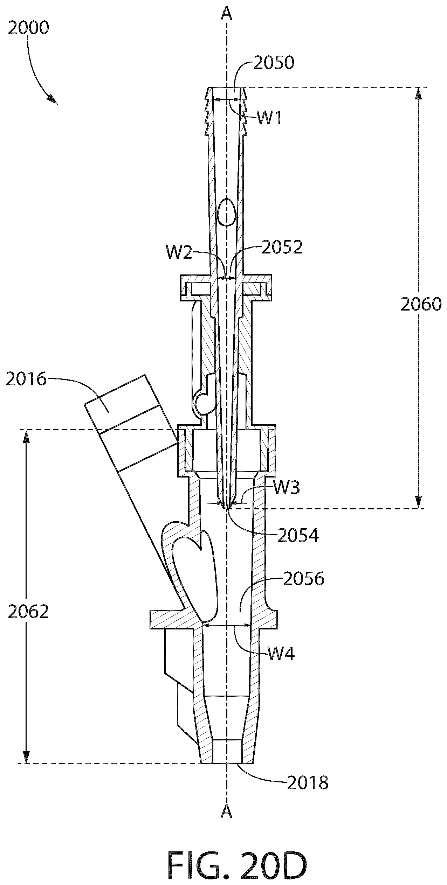

One or more of the portions 2050, 2052, 2054, 2056 may form one or more other portions, such as upper portion 2060 and lower portion 2062 (FIGS. 20D, 20E). Upper portion 2060 and lower portion 2062 may be axial portions. Upper portion 2060 may relate to an inner passageway and lower portion 2062 may relate to an inner passageway. The inner passageways of upper portion 2060 and lower portion 2062 may be fluidly coupled to one another. As shown on FIGS. 20D, 20E, the inner passageways of upper portion 2060 and lower portion 2062 may overlap one another. The inner passageway of upper portion 2060 may dispense (*e.g*., via an inner outlet) fluid into the lower portion 2062. The fluid dispensed from the upper portion 2060 to the lower portion 2062 may exit the nozzle 2000 via outlet 2018.

One or more of the portions (*e.g*., axial portions) of the nozzle 2000 may overlap one or more other portions of the nozzle 2000. For example, one or more of the portions of the nozzle 2000 may overlap one or more other portions such that the inlets and outlets of the portions are located within one or more of the portions (*e.g*., the other portions). As an example, as shown on FIG. 20E, upper portion 2060 may include an internal passageway that includes an outlet that dispenses fluid within nozzle 2000. For example, the outlet of upper portion 2060 may dispense fluid within lower portion 2062. The outlet that dispenses fluid within nozzle 2000 may include a constricting component. The constricting component may be narrowed to width W3, as shown on FIG. 20E, although the constricting component can be formed as other configurations in examples. The narrowing of the constricting component may restrict fluid that is encountering the constricting component. By restricting the fluid, the pressure or the velocity of the fluid may exit the outlet within nozzle 2000 at an increased pressure or velocity. The fluid that exits the outlet of upper portion 2060 may enter via one or more inlets, such as one or more jetted inlets. For example, the fluid that exits the outlet of upper portion 2060 may enter via one or more of hot jetted flow inlet 2002 or cold jetted flow inlet 2004.

Fluid received within hot jet 2002 or cold jet 2004 may move within upper portion 2060 and lower portion 2062. Fluid received within hot standard 2016 or cold standard 2010 may move within (*e.g*., may only move within) lower portion 2062. Fluid received within hot jet 2002 may move within first shaft 2008, second shaft 2014, and/or third shaft 2020, whereas fluid received within hot standard inlet 2016 may move within (*e.g*., only within) third shaft 2020. The inlets may couple to dispensing nozzle 2000 via one or more components, such as one or more coupling components. As an example, cold jet inlet 2004 may couple to dispensing nozzle 2000 via cold jet coupling 2006 and/or cold standard inlet 2010 may couple to dispensing nozzle 2000 via cold standard coupling 2012. In examples, one or more of the inlets may directly connect to the shafts of dispensing nozzle 2000, such as hot standard inlet 2016 coupling directly to third shaft 2020.

Dispensing nozzle 2000 may include one or more outlets (such as outlet 2018) through which the fluid may exit the dispensing nozzle 2000 to be injected into a cup or into the drip tray when a cup is not located on the drip tray, as described herein. Outlet 2018 of the dispense nozzle 2000 may be coaxial with hot jet 2002 of the dispensing nozzle 2000. One or more inlets of dispensing nozzle 2000, such as cold jetted flow inlet 2004, cold standard flow inlet 2010, and/or hot standard flow inlet 2016, may be oriented at an oblique angle relative to the outlet 2018 of the dispense nozzle 2000.

The hot jet inlet 2002, cold jetted flow inlet 2004, cold standard flow inlet 2010, and/or hot standard flow inlet 2016 may provide fluid to internal passageways. The internal passageways may relate to first portion 2050, second portion 2052, third portion 2054, and/or fourth portion 2056. As described herein, one or more of first portion 2050, second portion 2052, third portion 2054, and/or fourth portion 2056 may form upper portion 2060 and/or lower portion 2062. The internal passages may have cross-sectional areas. The cross-sectional areas of the internal passageways may have one or more widths, such as width W1, width W2, width W3, and/or width W4 shown on FIGS. 20D, 20E. One or more of the cross-sectional areas (*e.g.,* widths of the cross-sectional areas) of the inlets may be greater (or smaller) than one or more of the cross sectional areas (*e.g*., widths of the cross-sectional areas) of the other inlets. In examples, the cross-sectional areas (*e.g*., widths of the cross-sectional areas) of an internal passageways may be greater (or smaller) than the cross-sectional areas of other portions of the nozzle 2000, such as the inlets and/or outlets of nozzle 2000. In another example, the cross-sectional area of a portion of the nozzle (*e.g.,* lower portion 2062) may be greater (or smaller) than the cross-sectional area of one or more other portions of the nozzle 2000, such as upper portion 2060.

From the hot jetted inlet 2002, the water may flow into first portion 2050 of the dispense nozzle 2000. As described herein, in some examples the term flow may relate to direction in which fluid may pass through a conduit or passageway. The term flow may also, or alternatively, relate to a relationship (*e.g*., a structural relationship that may be directional) between one or more inlets, passageways, conduits, or the like. For example, hot jetted inlet 2002 may flow into first portion. In examples, the fluid received via the hot jetted inlet 2002 may flow from first portion 2050 through second portion 2052 and exit the internal passageway via an internal outlet located at third portion 2054.

The cross-sectional areas of portions 2050, 2052, 2054 may decrease as the fluid flows from the first portion through the third portion. Width W3, associated with the internal outlet located at third portion 2054, may be smaller than width W2 associated with the second portion 2052, which may be smaller than width W1 associated with the first portion 2050. Due to this smaller cross-sectional area (*e.g.,* width) of the portions according to the flow of fluid, and/or because the water is being pumped rather than being fed by gravity, the water received via hot jetted inlet 2002 and flowing along the pathway shown in FIG. 20E may exit the internal outlet (*e.g.,* at third portion 2054) and/or outlet 2018 of dispense nozzle 2000 with a higher pressure and velocity than the water received via cold standard inlet 2010 or hot standard inlet 2016.

The fluid received via cold jetted inlet 2004 may exit outlet 2018 of dispense nozzle 2000 with a higher pressure and velocity than the water received via cold standard inlet 2010 or hot standard inlet 2016. The cross-sectional area (*e.g.,* width W4) of the fourth portion 2056 may be larger than the cross-sectional area (*e.g.,* width W3) of the outlet of the third portion 2054 in which fluid is provided to fourth portion 2056. As shown on FIG. 20E, the fourth portion 2056 may be downstream of the internal outlet (having width W3) and/or the fourth portion 2056 may terminate at outlet 2018. Fluid received via cold standard inlet 2010 and/or hot standard inlet 2016 may not exit outlet 2018 at such a high pressure or velocity because the passageways in which the standard inlets are associated (such as conduits within the fourth portion) do not have similarly small cross-sectional areas.

As described herein, dispense nozzle 2000 includes first portion 2050, second portion 2052, third portion 2054, and fourth portion 2056. First portion 2050, second portion 2052, and third portion 2054 may form upper portion 2060, and fourth portion 2056 may form lower portion 2062. Third portion 2054 may be an outlet. For example, third portion 2054 may be an outlet that provides fluid from second portion 2052 to fourth portion 2056. Third portion 2054 may be an outlet that provides fluid from upper portion 2060 to lower portion 2062. As shown on FIGS. 20D and 20E, the cross-sectional areas (*e.g*., widths of the cross-sectional areas) of the first portion 2050, second portion 2052, third portion 2054, and fourth portion 2056 may differ in size. As an example, the cross-sectional areas (*e.g*., widths of the cross-sectional areas) of the first portion 2050, second portion 2052, third portion 2054, and fourth portion 2056 may differ (*e.g*., increase or decrease) in size. Width W1 of first portion 2050 may be larger (or smaller) than the width W2 of second portion 2052. The width W2 of second portion 2052 may be larger (or smaller) than width W3 of third portion 2054. Width W3 of third portion 2054 may be larger (or smaller) than Width W4 of fourth portion 2056, and so on.

The cross-sectional areas (*e.g*., widths of the cross-sectional areas) of the upper portion 2060, and lower portion 2062 may differ in size. As an example, the cross-sectional areas (*e.g*., widths of the cross-sectional areas) of the upper portion 2060 and lower portion 2062 may differ (*e.g*., increase or decrease) in size. Width W1, width W2, and width W3 of upper portion 2060 may be larger (or smaller) than width W4 of lower portion 2062. Width W3 of upper portion may define a width of the output from the upper portion 2060 to the lower portion 2062.

During use of the fluid subsystem 500, fluid (*e.g.,* water) that flows through the cold standard inlet 2010 and/or hot standard inlet 2016 may be dispensed from the dispense nozzle 2000 at the low pressure or low velocity. Water received from cold standard inlet 2010 and/or hot standard inlet 2016 may flow through the second shaft 2014 and/or third shaft 2020 of the dispense nozzle 2000 and be dispensed from the dispense nozzle 2000 at the low pressure or low velocity.

Water that flows through the cold jetted inlet 2004 and/or hot jetted inlet 2002 may be dispensed from the dispense nozzle 2000 at the high pressure or high velocity. Water received from cold jetted inlet 2004 and/or hot jetted inlet 2002 may flow through the first shaft 2008, second shaft 2014, and/or third shaft 2020 of the dispense nozzle 2000 and be dispensed from the dispense nozzle 2000 at the high pressure or high velocity. As described herein, water received from cold jetted inlet 2004 and/or hot jetted inlet 2002 may be dispensed from the dispense nozzle 2000 at the high pressure or high velocity due to the cross-sectional areas (*e.g.,* widths) of the passageways from which the jetted fluid flows being reduced as compared to the cross-sectional areas (*e.g*., widths) of the passageways from which the standard fluid flows.

As described herein, fluid (*e.g.,* water) may be dispensed at a high velocity, in part, due to the different cross-sectional areas (*e.g*., widths of the cross-sectional areas) of the first portion 2050, second portion 2052, third portion 2054, and/or fourth portion 2056. For example, water may be dispensed at a high velocity, in part, because width W3 of the third portion 2054 is smaller than width W2 of the second portion 2052, which is smaller than width W1 of the first portion 2050. Water may be dispensed at a high velocity due to the flow rate of the water flowing into the first portion 2050 as compared to the second portion 2052 and third portion 2054, as described herein (*e.g*., due to the water flowing via gravity or pumping at different pressures as described above).

Outlet 2018 is downstream of the third portion 2054 and fourth portion 2056. Because width W4 of fourth portion 2056 is larger than width W3 of third portion 2054, the water exiting from third portion 2054 may be shielded. For example, the water may be shielded by an inner surface, such as walls of the fourth portion 2056 that are wider apart than the walls of the third portion 2054. The shielding of the water via the inner surface of the fourth portion 2056 may reduce or eliminate splattering of fluid (*e.g.,* water) as the water exits from the third portion 2054. The fourth portion 2056 having a cross-sectional area (*e.g.,* width W4) that is greater than the cross-sectional area (*e.g.,* width W3) of third portion 2054 and/or the cross-sectional area (*e.g.,* width W2) of second portion 2052 may serve as a shield when the fluid is dispensed from inner outlet at third portion 2054.

As the shield is positioned below the high pressure jets (*e.g.,* hot jetted inlet 2002 and/or cold jetted inlet 2004), splatter radiating outwards from the inner outlet at third portion 2054 may be contained by the shield. The splatter contained by the shield may run down the inside of the shield and drop vertically downwards (*e.g*., downwards toward outlet 2018). The splatter (*e.g.,* free-falling splatter contained by the shield) may fall into the beverage vessel (*e.g.,* receptacle, cup) to be consumed by the user and may not be directed to the drip tray or countertop, which may result in reduced mess. In an example, if dewatering might impact the quality of the foam produced, the beverage dispenser may allow the cup to be removed (*e.g*., removed first) and the dewatering may be directed into the drip tray. In such example, the shielding may reduce the splattering to the tray (*e.g.,* not the surrounding counter).

For example, the splattering of fluid (*e.g.,* water) may contact one or more walls of the fourth portion 2056 (located within nozzle 2000). Upon or after contacting the inner surface of the fourth position, the splattering of the fluid may fall in a substantially vertical direction. In an example, gravity may cause the fluid to fall in a substantially vertical direction, although in other examples the fluid may move in one or more other directions. The fluid may move in one or more other directions via an assisting device, such as a fan, conduit, contoured design, and the like. The splattering may exit the nozzle 2000 without a reduced or eliminated mess. The splattering may exit the outlet 2018 or one or more other exits. In an example, the splattering may be held within one or more cavities or conduits of nozzle 2000 and be removed at a later date.

The water being removed from the fluid subsystem 500 (*e.g.,* during dewatering) may flow through the second and third portions 2052, 2054 of the dispense nozzle 2000. The high pressure nozzle (e.g., the second portion 2052 and/or third portion 2054, associated with the hot jetted inlet 2002 and/or cold jetted inlet 2004) may be shielded by being located inside dispense nozzle 2000. For example second portion 2052 and third portion 2054 may have a width (*e.g*., width W2, W3) that is less than width W4 of fourth portion 2056. Splattering that occurs may be contained by the inner surface (*e.g*., walls) within fourth portion 2056, as the walls within fourth portion 2056 are within the cavity of dispense nozzle 2000. Splattering that occurs may be contained by the walls within fourth portion 2056 as the splattering may contact the walls separate from (far from) the outlet 2018 of the dispense nozzle 2000. Splattering of water may fall (*e.g.,* fall vertically downwards) from one or more portions (*e.g.,* fourth portion 2056) of the nozzle 2000 to outlet 2018 of the dispense nozzle 2000. As a result, splattering of water that may produce a mess around conventional nozzles may be reduced or eliminated, as the water leaving the dispense nozzle 2000 through the outlet 2018 may fall vertically out of the nozzle and will not cause a splattering of the water.

In the nozzle 2000 of FIGS. 20A-20E, hot water may enter the dispense nozzle 2000 through hot jetted inlet 2002 when hot water is being injected as a jet (e.g., at high pressure/velocity) and/or cold water may enter the dispense nozzle 2000 through cold jetted inlet 2004 when cold water is being injected as a jet (e.g., at high pressure/velocity). In examples, the hot water may (*e.g*., may also) enter the dispense nozzle 2000 through the hot standard inlet 2016 when the hot water is being injected at low pressure and/or the cold water may enter the dispense nozzle 2000 through the cold standard inlet 2010 when the cold water is being injected at low pressure.

One or more of the standard and jetted inlets may be used simultaneously, for example, to provide additional water flow from the nozzle 2000. For example, to provide additional cold water flow from nozzle 2000, cold water may enter the dispense nozzle 2000 through the cold jet inlet 2004 and cold standard inlet 2010 when the cold water is being injected at low pressure. In other examples, cold water may enter the dispense nozzle 2000 through the cold jet inlet 2004 and cold standard inlet 2010 when the cold water is being injected at a high pressure. To provide additional hot water flow, hot water may enter the dispense nozzle 2000 through the hot jet inlet 2002 and hot standard inlet 2016 when the hot water is being injected at low pressure. Hot water may enter the dispense nozzle 2000 through the hot jet inlet 2002 and hot standard inlet 2016 when the hot water is being injected at a high pressure.

The hot and cold water conduits (*e.g*., internal passageways) for the low and/or high pressure injections may be combined (*e.g*., combined upstream) of the dispense nozzle 2000, for example, to reduce the number of openings into the nozzle 2000 and/or the number of conduits within the nozzle 2000. Although FIGS. 20A-E show dispense nozzle 2000 with four inlets, it should be understood that this number of inlets is for illustration purposes only. In examples, the number of inlets may be greater (*e.g.,* five, six, seven, eight) or less (*e.g.,* three, two,) than four inlets. For example, a nozzle may include six inlets that include two standard inlets for cold standard flow and/or two standard inlets for hot standard flow. The positions of the openings (*e.g*., inlets 2002, 2004, 2010, 2016) may be modified from that what is shown. Moreover, although the dispense nozzle 2000 is shown as being formed from more than one component, in examples the dispense nozzle 2000 may be a one-piece unitary structure.

As used throughout, ranges are used as shorthand for describing each and every value that is within the range. Any value within the range can be selected as the terminus of the range.

## Claims

1. A method for providing a fluid from a dispensing nozzle to a beverage ingredient, the method comprising:
providing a receptacle containing the beverage ingredient;
positioning at least one of the dispensing nozzle or the receptacle so that an outlet of the dispensing nozzle is located proximate a receiving portion of the receptacle;
dispensing the fluid from the outlet of the dispensing nozzle to the receiving portion of the receptacle at a first pressure for a first duration that is sufficient to cover at least a portion of the beverage ingredient in the receptacle;
introducing the fluid from the outlet of the dispensing nozzle to the receiving portion of the receptacle at a second pressure for a second duration, the second pressure being greater than the first pressure;
**characterized in that** the fluid is introduced into the receiving portion of the receptacle at the second pressure following expiration of the first duration and a delay duration.

2. The method according to claim 1, wherein the delay duration is between three-quarters of a second and two seconds.

3. The method according to claim 1 or claim 2, wherein the first duration is sufficient to cover the beverage ingredient in the receptacle with the fluid prior to the fluid being introduced into the receptacle at the second pressure.

4. The method according to any one of claims 1-3, wherein the dispensing nozzle comprises:
a first inlet and a second inlet configured to receive the fluid having a first temperature; and
a third inlet and a fourth inlet configured to receive the fluid having a second temperature;
wherein the outlet is configured to dispense the fluid having at least one of the first or second temperatures;
wherein when the fluid is introduced into the dispensing nozzle via at least one of the first inlet or the third inlet, the fluid is dispensed from the outlet at the first pressure;
wherein when the fluid is introduced into the dispensing nozzle via at least one of the second inlet or the fourth inlet, the fluid is dispensed from the outlet at the second pressure; and
wherein the second pressure is different than the first pressure.

5. The method according to claim 4, wherein the first temperature is different than the second temperature.

6. The method according to claim 5, wherein the first temperature is a cold temperature and the second temperature is a hot temperature.

7. The method according to any one of claims 1-6, wherein the beverage ingredient comprises powder producing a drinkable beverage such as coffee, tea, hot chocolate, juice, or seltzer.

8. The method according to any one of claims 1-7, wherein the outlet is a sole outlet of the dispensing nozzle.

9. The method according to any one of claims 1-8 wherein the delay duration is a period of time that follows the first duration and precedes the second duration, and wherein during the delay duration no fluid is dispensed from the outlet of the dispensing nozzle into the receptacle.

## Patentansprüche

1. Verfahren zur Bereitstellung eines Fluids aus einer Abgabedüse zu einem Getränkeinhaltsstoff, wobei das Verfahren umfasst:
Bereitstellen eines Behälters, der den Getränkeinhaltsstoff enthält;
Positionieren mindestens einer bzw. eines von der Abgabedüse oder dem Behälter, so dass sich ein Auslass der Abgabedüse nahe einem Aufnahmeteil des Behälters befindet;
Abgeben des Fluids aus dem Auslass der Abgabedüse an den Aufnahmeteil des Behälters mit einem ersten Druck für eine erste Dauer, die dazu ausreicht, mindestens einen Teil des Getränkeinhaltsstoff in dem Behälter abzudecken;
Einbringen des Fluids aus dem Auslass der Abgabedüse in den Aufnahmeteil des Behälters mit einem zweiten Druck für eine zweite Dauer, wobei der zweite Druck größer als der erste Druck ist;
**dadurch gekennzeichnet, dass** das Fluid nach Ablauf der ersten Dauer und einer Verzögerungsdauer in den Aufnahmeteil des Behälters mit dem zweiten Druck eingebracht wird.

2. Verfahren nach Anspruch 1, wobei die Verzögerungsdauer zwischen Dreiviertel einer Sekunde und zwei Sekunden liegt.

3. Verfahren nach Anspruch 1 oder Anspruch 2, wobei die erste Dauer dazu ausreicht, den Getränkeinhaltsstoff in dem Behälter mit dem Fluid abzudecken, bevor das Fluid in den Behälter mit dem zweiten Druck eingebracht wird.

4. Verfahren nach einem der Ansprüche 1-3, wobei die Abgabedüse umfasst:
einen ersten Einlass und einen zweiten Einlass, die dazu konfiguriert sind, das Fluid mit einer ersten Temperatur aufzunehmen; und
einen dritten Einlass und einen vierten Einlass, die dazu konfiguriert sind, das Fluid mit einer zweiten Temperatur aufzunehmen;
wobei der Auslass dazu konfiguriert ist, das Fluid mit mindestens einer von der ersten oder der zweiten Temperatur abzugeben;
wobei, wenn das Fluid mittels mindestens einem von dem ersten Einlass oder dem dritten Einlass in die Abgabedüse eingebracht wird, das Fluid aus dem Auslass mit dem ersten Druck abgegeben wird;
wobei, wenn das Fluid mittels mindestens einem von dem zweiten Einlass oder dem vierten Einlass in die Abgabedüse eingebracht wird, das Fluid aus dem Auslass mit dem zweiten Druck abgegeben wird; und
wobei sich der zweite Druck von dem ersten Druck unterscheidet.

5. Verfahren nach Anspruch 4, wobei sich die erste Temperatur von der zweiten Temperatur unterscheidet.

6. Verfahren nach Anspruch 5, wobei die erste Temperatur eine kalte Temperatur ist und die zweite Temperatur eine heiße Temperatur ist.

7. Verfahren nach einem der Ansprüche 1-6, wobei der Getränkeinhaltsstoff Pulver umfasst, das ein genießbares Getränk produziert, wie Kaffee, Tee, heiße Schokolade, Saft oder Selters.

8. Verfahren nach einem der Ansprüche 1-7, wobei der Auslass ein einziger Auslass der Abgabedüse ist.

9. Verfahren nach einem der Ansprüche 1-8, wobei die Verzögerungsdauer ein Zeitraum ist, der auf die erste Dauer folgt und der zweiten Dauer vorangeht, und wobei während der Verzögerungsdauer kein Fluid aus dem Auslass der Abgabedüse in den Behälter abgegeben wird.

## Revendications

1. Un procédé destiné à fournir un fluide par une buse de distribution à un ingrédient de boisson, le procédé comprenant :
la fourniture d'un réceptacle contenant l'ingrédient de boisson ;
le positionnement de soit la buse de distribution, soit le réceptacle de façon à ce qu'un orifice de sortie de la buse de distribution soit situé à proximité d'une partie de réception du réceptacle ;
la distribution du fluide par l'orifice de sortie de la buse de distribution à la partie de réception du réceptacle à une première pression pendant une première durée qui est suffisante pour couvrir au moins une partie de l'ingrédient de boisson dans le réceptacle ;
l'introduction du fluide par l'orifice de sortie de la buse de distribution à la partie de réception du réceptacle à une deuxième pression pendant une deuxième durée, la deuxième pression étant supérieure à la première pression ;
**caractérisé en ce que** le fluide est introduit dans la partie de réception du réceptacle à la deuxième pression à la suite de l'expiration de la première durée et d'une durée de retard.

2. Le procédé selon la revendication 1, dans lequel la durée de retard est comprise entre trois-quarts de seconde et deux secondes.

3. Le procédé selon la revendication 1 ou la revendication 2, dans lequel la première durée est suffisante pour couvrir l'ingrédient de boisson dans le réceptacle par le fluide avant que le fluide ne soit introduit dans le réceptacle à la deuxième pression.

4. Le procédé selon l'une quelconque des revendications 1 à 3, dans lequel la buse de distribution comprend :
un premier orifice d'entrée et un deuxième orifice d'entrée configurés pour recevoir le fluide ayant une première température ;
et
un troisième orifice d'entrée et un quatrième orifice d'entrée configurés pour recevoir le fluide ayant une deuxième température ;
dans lequel l'orifice de sortie est configuré pour distribuer le fluide ayant soit la première température, soit la deuxième température ;
dans lequel, lorsque le fluide est introduit dans la buse de distribution par soit le premier orifice d'entrée, soit le troisième orifice d'entrée, le fluide est distribué par l'orifice de sortie à la première pression ;
dans lequel lorsque le fluide est introduit dans la buse de distribution par soit le deuxième orifice d'entré, soit le quatrième orifice d'entrée, le fluide est distribué par l'orifice de sortie à la deuxième pression ; et
dans lequel la deuxième pression est différente de la première pression.

5. Le procédé selon la revendication 4, dans lequel la première température est différente de la deuxième température.

6. Le procédé selon la revendication 5, dans lequel la première température est une température froide et la deuxième température est une température chaude.

7. Le procédé selon l'une quelconque des revendications 1 à 6, dans lequel l'ingrédient de boisson est constitué d'une poudre produisant une boisson buvable, telle que du café, du thé, du chocolat chaud, du jus ou de l'eau gazeuse.

8. Le procédé selon l'une quelconque des revendications 1 à 7, dans lequel l'orifice de sortie est un orifice de sortie unique de la buse de distribution.

9. Le procédé selon l'une quelconque des revendications 1 à 8, dans lequel la durée de retard est une période de temps qui suit la première durée et précède la deuxième durée, et dans lequel pendant la durée de retard, il n'y a pas de fluide distribué par l'orifice de sortie de la buse de distribution dans le réceptacle.
